(19) Europäisches Patentamt
European Patent Office
Office européen des brevets

(11) **EP 1 626 549 B1**

(12) **EUROPÄISCHE PATENTSCHRIFT**

(45) Veröffentlichungstag und Bekanntmachung des Hinweises auf die Patenterteilung:
**06.05.2015  Patentblatt 2015/19**

(51) Int Cl.:
***H04L 27/00*** *(2006.01)*

(21) Anmeldenummer: **05015162.0**

(22) Anmeldetag: **12.07.2005**

(54) **Verfahren und Vorrichtung zum Schätzen einer Trägerfrequenz mit blockweiser Grobschätzung**

Method and apparatus for estimating carrier frequency using a block-wise coarse estimation

Procédé et dispositif d'estimation d'une fréquence porteuse à estimation grossière par blocs

(84) Benannte Vertragsstaaten:
**DE FR GB**

(30) Priorität: **11.08.2004   DE 102004039016**

(43) Veröffentlichungstag der Anmeldung:
**15.02.2006   Patentblatt 2006/07**

(73) Patentinhaber: **Rohde & Schwarz GmbH & Co. KG**
**81671 München (DE)**

(72) Erfinder: **Schmidt, Kurt, Dr.**
**85567 Grafing (DE)**

(74) Vertreter: **Körfer, Thomas et al**
**Mitscherlich PartmbB**
**Patent- und Rechtsanwälte**
**Postfach 33 06 09**
**80066 München (DE)**

(56) Entgegenhaltungen:
EP-A- 1 505 786      EP-A- 1 619 846
DE-A1- 10 309 262    US-A1- 2002 181 391

- MACLEOD: "Fast nearly ML estimation of the parameters of real or complex single tones or resolved multiple tones" IEEE TRANSACTIONS ON SIGNAL PROCESSING, Bd. 46, Nr. 1, Januar 1998 (1998-01), Seiten 141-148, XP002280628 New York, US
- QUINN: "Estimation of frequency, amplitude, and phase from the DFT of a time series" IEEE TRANSACTIONS ON SIGNAL PROCESSING, Bd. 45, Nr. 3, März 1997 (1997-03), Seiten 814-817, XP002371434 New York, US
- QUINN: "Estimating frequency by interpolation using Fourier coefficients" IEEE TRANSACTIONS ON SIGNAL PROCESSING, Bd. 42, Nr. 5, Mai 1994 (1994-05), Seiten 1264-1268, XP002371435 New York, US

EP 1 626 549 B1

**Beschreibung**

Die Erfindung betrifft ein Verfahren und eine Vorrichtung zum Schätzen der Frequenz einer digitalen Signalfolge.

Verfahren zum Erfassen der Frequenz eines digitalen Signals werden in der digitalen Signalverarbeitung, beispielsweise für die Mobilfunktechnik benötigt. Es besteht daher ein Bedürfnis nach einem universell einsetzbaren robusten Verfahren, das mit geringem nummerischen Aufwand auskommt.

Aus der DE 101 38 963 A1 geht ein Verfahren zum Schätzen von Parametern eines CDMA-Signals hervor. Unter anderem werden dort der Frequenzversatz und der Phasenversatz eines digitalen Signals gegenüber einem Referenz- bzw. Synchronisationssignal geschätzt. Dieses Verfahren ist speziell auf die orthogonalen Codekanäle eines CDMA-Signals abgestimmt und daher nicht universell einsetzbar. Ein weiteres Verfahren ist aus der US 2002/181391 bekannt.

Ein Schätzverfahren gemäß den Figuren 5 und 6 der vorliegenden Anmeldung ergibt sich aus der Patentanmeldung DE 103 09 262 A1.

Der Erfindung liegt die Aufgabe zugrunde, ein Verfahren und eine Vorrichtung zum Schätzen der Frequenz einer digitalen Eingangs-Signalfolge zu schaffen, welches einen geringen numerischen Aufwand erfordert, auch bei niedrigem Signal-Rausch-Abstand funktioniert, schnell konvergiert und universell einsetzbar ist.

Die Aufgabe wird hinsichtlich des Verfahrens durch die Merkmale des Anspruchs 1 und hinsichtlich der Vorrichtung durch die Merkmale des Anspruchs 18 gelöst.

Die Unteransprüche 2-17 beinhalten vorteilhafte Weiterbildungen des erfindungsgemäßen Verfahrens.

Anspruch 19 betrifft ein digitales Speichermedium und Anspruch 20 betrifft ein Computerprogramm zur Durchführung des erfindungsgemäßen Verfahrens.

Die Erfindung wird nachfolgend anhand der Zeichnung näher beschrieben. In der Zeichnung zeigen:

Fig. 1 ein Blockschaltbild eines der Erfindung zugrundeliegenden digitalen Übertragungssystems;

Fig. 2 das Übertragungsmodell in äquivalenten Tiefpaßbereich;

Fig. 3 ein systemtheoretisches Modell in zeitdiskreter Basisbanddarstellung;

Fig. 4 eine schematische Darstellung einer Matrix;

Fig. 5 ein Blockschaltbild zur Erläuterung eines bereits in der DE 103 09 262 beschriebenen Verfahrens;

Fig. 6 ein Blockschaltbild einer vorteilhaften Weiterbildung des bekannten Verfahrens;

Fig. 7 ein Mitteilungsfilter mit Dizimation;

Fig. 8 die Reduktion des Signal/Rausch-Verhältnisses durch das Mitteilungsfilter; und

Fig. 9 ein Blockschaltbild zur Erläuterung des erfindungsgemäßen Verfahrens.

Nachfolgend wird zunächst zum besseren Verständnis der Erfindung ein der Erfindung zugrundeliegendes Modell eines digitalen Übertragungssystems erläutert.

Im Rahmen der vorliegenden Anmeldung werden folgende Formelzeichen verwendet:

$\alpha$ Allgemeiner Summationsindex

$a$ Komplexe zu sendende Symbolfolge

$a_\nu$ $\nu$-tes Symbol der Folge $a$

$a_{\nu,I}$ Imaginärteil des v-ten Symbols der Folge $a$

$a_{\nu,R}$ Realteil des v-ten Symbols der Folge $a$

$\arg\{\cdot\}$ Argumentbildung

$\beta$ Allgemeiner Summationsindex

$\delta(t)$ Diracimpuls (Delta-Funktional)

$\delta_{\nu\mu}$ Kronecker-Operator

$\varepsilon$ Normierter Zeitversatz

$E\{\cdot\}$ Erwartungswert

$f(\cdot)$ Allgemeine Funktion

$\Delta f$ Zu schätzender Frequenzversatz zwischen Sender und Empfänger

$\Delta f_{err}$     Verbleibender Schätzfehler am Ausgang der Feinschätzstufe des uML

$\Delta f_{err,limit}$     Definierte Schranke für den maximal zulässigen Schätzfehler am Ausgang der Feinschätzstufe

$\Delta f_{rest}$     Durch die Feinschätzung des uML-Schätzers zu schätzender Frequenzversatz, der nach erfolgter Kompensation mit dem Grobschätzwert $\Delta \hat{f}_{coarse}$ verbleibt

$\Delta f_{rest}^{\{it\}}$     Vom Feinschätzalgorithmus in der it-ten Iteration zu schätzende Frequenz

$\Delta f_{rest,conv}$     Maximales $\Delta f_{rest}$, für welches der Feinschätzalgorithmus noch konvergiert

$\Delta f_{rest,max}$     Maximaler Frequenzversatz $\Delta f_{rest}$ am Ausgang der Grobschätzstufe

$\Delta \tilde{f}_{coarse}$     Probierwert für $\Delta f$

$\Delta \hat{f}$     Schätzwert für $\Delta f$

$\Delta \hat{f}_{coarse}$     Frequenzschätzwert der Grobschätzung des universellen ML-Schätzers

$\Delta \hat{f}_{fine}$     Frequenzschätzwert der Feinschätzung des universellen ML-Schätzers

$\Delta \hat{f}_{fine}^{\{it\}}$     Bei der *it*-ten Iteration des Feinschätzalgorithmus ermittelter Schätzwert

$\Delta \hat{f}_{fine\_total}$     Summe aller bis zur aktuellen Iteration des Feinschätzalgorithmus ermittelten Schätzwerte $\Delta \hat{f}_{fine}^{\{it\}}$

$\Delta \hat{f}_{int}$     Schätzwert für $\Delta f_{rest}$ am Ausgang der Grobschätzstufe beim Verfahren zur nachträglichen Erhöhung der Frequenzauflösung des uML-Schätzers

$f_{+\frac{1}{2}\cdot Q}$     Versuchswerte für die Schätzung von $\Delta f_{rest}$ beim

$f_{-\frac{1}{2}\cdot Q}$     Verfahren zur nachträglichen Erhöhung der Frequenzauflösung des uML-Schätzers

$f_Q$     Quantisierung der FFT im Frequenzbereich (Frequenzauflösung)

$f_S$     Symbolrate (= $1/T_S$)

$f_{T\,Sender}$     Trägerfrequenz des Modulators im Sender

$f_{T\,Empfänger}$     Trägerfrequenz des Modulators im Empfänger

$F(\cdot)$     Stammfunktion der allgemeinen Funktion $f(\cdot)$

$F_{nN}$     Verteilungsfunktion der normierten Normalverteilung

$FFT\{\cdot\}$     Fouriertransformation

$\Gamma(\nu \cdot T_a/T_{beob})$     Zeitdiskrete Gewichtsfunktion, die durch Faltung zweier reeller Rechteck-folgen der Länge $N_{Sym}$ mit einer konstanten Amplitude von 1 entsteht

$g$     Zu schätzende Verstärkung

$\tilde{g}$     Probierwert für $g$

$\hat{g}$     Schätzwert für $g$

$h_e(t)$     Impulsantwort des Empfangsfilters

$h_{ges}(t)$     Impulsantwort der Gesamtübertragungsstrecke

$h_S(t)$     Impulsantwort des Sendefilters

$it$     Aktuelle Iterationszahl des Feinschätzalgorithmus des uML-Schätzers

$IFFT\{\cdot\}$     Inverse Fouriertransformation

$Im\{\cdot\}$     Imaginärteilbildung

$\kappa$     Allgemeiner Summationsindex

$k$     Zählvariable

$K_1, K_2$     Eingeführte Substitutionen für spezielle Zahlenreihen

$L(\cdot)$     Log-Likelihood-Funktion

$\mu$     Index für bestimmte Frequenz innerhalb des diskreten Frequenzspektrums

$\mu_{max}$     Index der diskreten Frequenz, bei der das Maximum von $Y_\mu$ vorliegt

$max\{f(x)\}$     Maximumbildung der Funktion $f(x)$ bezüglich des Parameters $x$

$M_{\alpha,\beta}$     Matrixelement in Zeile $\alpha$, Spalte $\beta$

n     Komplexe Rauschfolge (AWGN)

$n_\nu$     $\nu$-tes Symbol der Rauschfolge **n**

$n_{\nu,I}$     Imaginärteil des $\nu$-ten Symbols der Rauschfolge **n**

$n_{\nu,R}$     Realteil des $\nu$-ten Symbols der Rauschfolge **n**

$nof\_it$     Gesamtzahl der vom Feinschätzalgorithmus durchzuführenden Iterationen

N     Menge der natürlichen Zahlen

½·$N_0$    Zweiseitiges Leistungsdichtespektrum des Rauschsignals

$N_{FFT}$    FFT-Länge bei der Frequenz-Grobschätzung des universellen ML-Schätzers

$N_{sym}$    Länge der gesendeten Symbolfolge (= Schätzlänge)

$v$    Index für ein bestimmtes Symbol innerhalb der Symbolanzahl $N_{Sym}$

$\Delta\omega$    Zu schätzender Frequenzversatz als Kreisfrequenz

$\Delta\tilde{\omega}$    Probierwert für $\Delta\omega$

$\Delta\hat{\omega}$    Schätzwert für $\Delta\omega$

$\Delta\varpi$    Zu schätzender Frequenzversatz als Kreisfrequenz, normiert auf $T_a$

$\Delta\tilde{\varpi}$    Probierwert für $\Delta\varpi$ $\Delta$

$\Delta\hat{\varpi}$    Schätzwert für $\Delta\varpi$ $\Delta$

$\varphi_{yv,comp}$    Phase des v-ten Gliedes der Folge $y_{comp}$

$\phi$    Zu schätzender Phasenversatz zwischen Sender und Empfänger

$\tilde{\phi}$    Probierwert für $\phi$

$\hat{\phi}$    Schätzwert für $\phi$

$\hat{\phi}_{err,max}$    Maximaler Phasenschätzfehler

$P(\cdot)$    Auftrittswahrscheinlichkeit

$P(a \leq x \leq b)$    Wahrscheinlichkeit, daß der Parameter x zwischen den Grenzen a und b liegt

$r$    Komplexe Empfangsfolge am Ausgang des zeitdiskreten Ersatzkanals

$r_v$    v-tes Symbol der Empfangsfolge $r$

$Re\{\cdot\}$    Realteilbildung

s    Komplexe Sendefolge ( Symbolfolge $a$ moduliert mit $\Delta f$, $\phi$ und $g$)

$s_v$    v-tes Symbol der Sendefolge $s$

$\sigma^2_{CR,f}$    Untere Grenze der Varianz von $\Delta\hat{f}$ ($\triangleq$ Cramér-Rao-Grenze)

$\sigma^2_{CR,f}$    Untere Grenze der Standardabweichung von $\Delta\hat{\varpi}$ ($\triangleq$ Cramér-Rao-Grenze)

$\sigma^2_{CR,\varpi}$    Untere Grenze der Varianz von $\Delta\hat{\varpi}$ ($\triangleq$ Cramér-Rao-Grenze)

$\sigma_{CR,\phi}$    Untere Grenze der Standardabweichung von $\hat{\phi}$ ($\triangleq$ Cramér-Rao-Grenze)

$\sigma^s_{Cr,\phi}$    Untere Grenze der Varianz von $\hat{\phi}$ ($\triangleq$ Cramér-Rao-Grenze)

$\sigma_\varpi$    Standardabweichung des Frequenzschätzfehlers

$\sigma_\phi$    Standardabweichung des Phasenschätzfehlers

$\sigma_{\phi,krit}$    Standardabweichung des Phasenschätzfehlers für $SNR_{krit}$

$SNR$    Linearer Signal-Rausch-Abstand

$SNR_{krit}$    Kritischer Signal-Rausch-Abstand, bei dem die Frequenz- bzw. Phasenschätzung des uML-Schätzers gerade noch effizient arbeitet

$T_a$    Abtastzeit

$T_{beob}$    Beobachtungsdauer

$T_S$    Symboldauer

window($v$)    Fensterfunktion zur Beschneidung einer Folge auf eine festgelegte Länge

$x$    Modulationsbereinigte komplexe Empfangsfolge

$x_v$    v-tes Symbol der modulationsbereinigten Empfangsfolge $x$

$X_\mu$    $\mu$-tes Folgenglied der Fouriertransformierten der Folge $x$

$y$    Komplexe Folgen, entspricht der inversen FFT des betragsquadrierten Spektrums der Folge $x$

$y_v$    v-tes Symbol der Folge $y$

$y_{comp}$    Mit $\Delta\hat{f}_{coarse}$ kompensierte Folge am Ausgang der Grobschätzstufe des uML

$y_{v,comp}$    v-tes Symbol der Folge $y_{comp}$

$y_{v,comp}^{\{it\}}$    v-tes Symbol einer frequenzkompensierten Folge innerhalb der it-ten Iteration des Feinschätzalgorithmus des universellen ML-Schätzers

$Y_\mu$    $\mu$-tes Folgenglied der Fouriertransformierten der Folge $y$

*z\**      Konjugiert komplexer Wert der Variable z

Z      Komplexer Gesamtzeiger einer Summe

Im Rahmen der vorliegenden Anmeldung werden folgende Abkürzungen verwendet:

AWGN      Additive White Gaussian Noise

*const*      konstant

CRB      Cramér-Rao-Grenze

DA      Data Aided

dB      Dezibel

FFT      Fast Fourier Transformation

ISI      Intersymbolinterferenz

LDS      Leistungsdichtespektrum

LLF      Log-Likelihood-Funktion

ML      Maximum Likelihood

NDA      Non Data Aided

QAM      Quadratur-Amplituden-Modulation

SNR      Signal-Rausch-Abstand (signal to noise ratio)

uML      Universeller Maximum-Likelihood-Schätzer für Frequenz und Phase

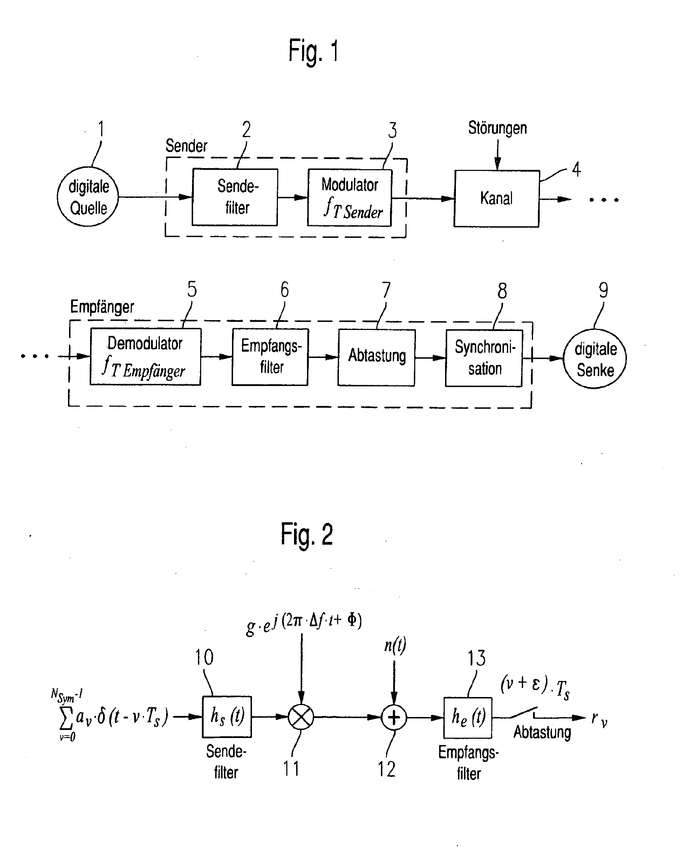

Die Notwendigkeit der Frequenz- und Phasenschätzung zur Trägersynchronisation ergibt sich aus dem Aufbau von digitalen Übertragungssystemen. In Fig. 1 sind die Grundelemente der eines solchen Übertragungssystems dargestellt.

Nachdem durch ein Sendefilter 2 eine Impulsformung des zu übertragenden digitalen Quellensignals der digitalen Quelle 1 durchgeführt wurde, erfolgt in dem Modulator 3 die Modulation des Signals mit der Trägerfrequenz $f_{T\,Sender}$. Bei der Übertragung über den Kanal 4 wird das nun im Bandpaßbereich vorliegende Signal durch die Überlagerung von Störungen verfälscht. Im Rahmen dieser Anmeldung wird von einem sogenannten AWGN-Kanal ausgegangen, d.h. als Störung wird die Addition eines Rauschsignals mit gaußförmig verteilter Amplitude und einem für alle Frequenzen konstantem Leistungsdichtespektrum (LDS) von $\frac{1}{2} \cdot N_0$ angenommen. Das verrauscht beim Empfänger ankommende Signal wird durch den Demodulator 5 mit der Frequenz $f_{T\,Empfänger}$ zurück ins Basisband transformiert. Mit Hilfe des nachfolgenden Empfangsfilters 6 wird anschließend die Störleistung reduziert. Dadurch und durch eine erfolgreiche Abtastung in der Abtasteinheit 7 bzw. Synchronisation in der Synchronisationseinheit 8 wird eine Decodierung des tatsächlich gesendeten Signals in der digitalen Senke 9 ermöglicht.

Im Rahmen der Synchronisation ist neben der Taktsynchronisation eine Frequenz- und Phasenschätzung notwendig, da sich zum einen die Frequenz der lokalen Oszillatoren von Sender und Empfänger geringfügig um

$$\Delta f = f_{T\,Sender} - f_{T\,Empfänger} \tag{1}$$

unterscheidet. Zum anderen besteht auch eine Phasenverschiebung $\phi$ zwischen Sender und Empfänger. Dieser Frequenz- bzw. Phasenversatz muß durch Schätzung ermittelt und beim Empfangssignal kompensiert werden, damit in der digitalen Senke 9 auf die richtigen Symbolpunkte entschieden werden kann.

Ausgehend vom beschriebenen Blockschaltbild nach Fig. 1 läßt sich ein Übertragungsmodell für den äquivalenten Tiefpaßbereich nach Fig. 2 erstellen. Dabei wird die zeitdiskrete Folge komplexer Sendesymbole mit der Symboldauer $T_S$ durch das Sendefilter 10 mit der Impulsantwort $h_S(t)$ zum Sendesignal geformt. Der Frequenz- und Phasenversatz zwischen Sender und Empfänger wird in Form eines Drehzeigers durch den Multiplizierer 11 aufmoduliert, wobei zusätzlich eine Verstärkung g berücksichtigt wird. Nachdem im Kanal weißes Rauschen durch den Addierer 12 additiv überlagert wurde, erfolgt im Empfänger die Filterung durch das Empfangsfilter 13 mit der Impulsantwort $h_e(t)$. Das gefilterte Empfangssignal wird schließlich in Abständen von $T_a$ abgetastet, wobei ein Zeitversatz $\varepsilon \cdot T_S$ gegenüber den idealen Abtastzeitpunkten auftreten kann.

Für eine erfolgreiche Frequenz- und Phasenschätzung sind nun mehrere Voraussetzungen notwendig. Zum einen muß beim Empfänger eine entsprechende Taktsynchronisation vorliegen, d.h. es wird

$$\varepsilon \overset{!}{=} 0 \qquad\qquad\qquad (2)$$

vorausgesetzt.

Zum anderen muß die erste Nyquistbedingung erfüllt sein, so daß eine intersymbolinterferenzfreie (ISI-freie) Abtastung erfolgen kann. Dafür müssen Sende- und Empfangsfilter so beschaffen sein, daß die Impulsantwort

$$h_{ges}(t) = h_s(t) * h_e(t) \qquad\qquad\qquad (3)$$

der Gesamtübertragungsstrecke die Nyquistbedingung erfüllt:

$$h_{ges}(\nu \cdot T_a) = \begin{cases} const & für \ \ \nu = 0 \\ 0 & sonst \end{cases} \qquad\qquad (4)$$

Dies ist dann gegeben, wenn als Sendefilter 10 und Empfangsfilter 13 z.B. sogenannte Root-Raised-Cosine-Filter verwendet werden. Darüber hinaus muß der Frequenzversatz $\Delta f$ zwischen Sender und Empfänger so klein sein, daß sich das Sendefilter 10 und das Empfangsfilter 13 im Frequenzbereich noch ausreichend überdecken. Es muß daher folgende Forderung erfüllt sein:

$$|\Delta f| << \frac{1}{T_S} \qquad\qquad\qquad (5)$$

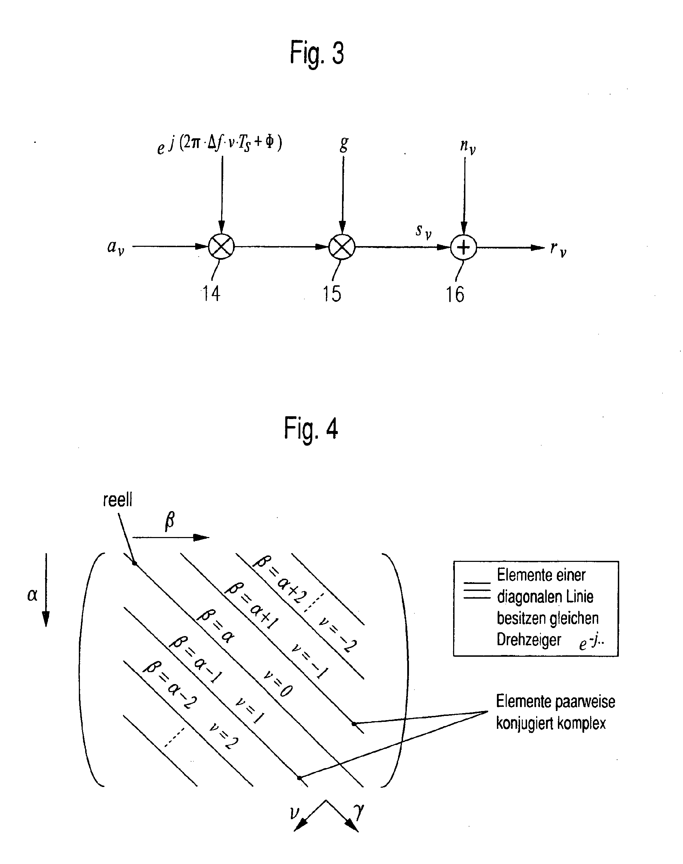

Falls die erste Nyquist-Bedingung erfüllt ist, kann das in Fig. 2 dargestellte Übertragungsmodell zu dem in Fig. 3 dargestellten zeitdiskreten Basisbandmodell vereinfacht werden. Dieses Modell stellt den Ausgangspunkt für die Betrachtungen und Simulationen im Rahmen dieser Anmeldung dar.

Die Symbole $a_\nu$ der zu sendenden Folge $a$ werden dabei zunächst durch den Multiplizierer 14 mit einem Drehzeiger multipliziert, welcher den Frequenz- und Phasenversatz zwischen Sender und Empfänger modelliert. Nach einer Verstärkung mit dem reellen Faktor g durch den Multiplizierer 15 wird die entstandene Sendefolge $s$ im zeitdiskreten Ersatzkanal durch die durch den Addierer 16 addierte komplexe Rauschfolge $n$ gestört, so daß dadurch schließlich die Symbole $r_\nu$ der Empfangsfolge $r$ entstehen.

Der nachfolgend anhand der Figuren 1 bis 6 beschriebene Maximum-Likelihood (ML)-Schätzer für Frequenz und Phase bei großen Beobachtungslängen basiert auf einem universell einsetzbaren Frequenz- und Phasenschätzalgorithmus, der nach dem Maximum-Likelihood-Prinzip arbeitet. Der universelle Maximum-Likelihood (nachfolgend als "uML" bezeichnet)-Schätzer für Frequenz und Phase, wie er bereits in der Anmeldung DE 103 09 262 grundlegend beschrieben ist, wird im Folgenden diskutiert.

Der uML-Algorithmus ist eine exakte Umsetzung des Maximum-Likelihood-Prinzips, d.h. er ist der optimale Schätzer für einen AWGN-Kanal. Es werden dabei keine Näherungen angewendet, so daß keine nichtlinearen Phänomene wie das Cycle-Slipping der Phase auftreten können. Dadurch wird auch bei sehr niedrigen Störabständen der ideale ML-Schätzwert ermittelt, d.h. die Schätzgenauigkeit ist nur durch die Cramér-Rao-Grenze festgelegt. Dabei arbeitet der Algorithmus auch für Symbolalphabete mit nicht konstanten Beträgen $|a_\nu|$ optimal.

Das Verfahren wird für den sogenannten Data-Aided-Fall (DA) hergeleitet, d.h. zur Durchführung der Frequenz- und Phasenschätzung wird eine Datensequenz übertragen, welche dem Empfänger bekannt ist. Es sei jedoch erwähnt, daß durch Anwendung einer Nichtlinearität zur Entfernung der Modulation der uML-Algorithmus auch für den Non-Data-Aided-Fall (NDA) verwendet werden kann.

Dem Schätzproblem liegt das Übertragungsmodell nach Fig. 3 zugrunde:

Die ungestörte Sendefolge **s** ist durch

$$s_v = g \cdot a_v \cdot e^{j(2\pi \cdot \Delta f \cdot v \cdot T_s + \phi)} \tag{6}$$

vorgegeben und wird im AWGN-Kanal durch eine additive, weiße Rauschfolge n gestört.

Es entsteht dabei die Empfangsfolge **r** mit:

$$r_v = s_v + n_v \tag{7}$$

Auf der Empfängerseite sollen nun aus der Empfangsfolge **r** nach dem Maximum-Likelihood-Prinzip folgende Parameter der Sendefolge s geschätzt werden:

- Frequenzversatz $\Delta f$
- Phasenversatz $\phi$
- Verstärkung $g$ (reell)

Die Maximum-Likelihood-Schätzung der obengenannten Parameter erfolgt durch Minimierung der Log-Likelihood-Funktion. Folgende Gleichung (8) ist die für das vorliegende Übertragungsmodell bzw. Schätzproblem zutreffende Log-Likelihood-Funktion:

$$L(\widetilde{g}, \widetilde{\Delta f}, \widetilde{\phi}) = \sum_{v=0}^{N_{Sym}-1} \left| r_v - \widetilde{g} \cdot a_v \cdot e^{j(2\pi \cdot \widetilde{\Delta f} \cdot v \cdot T_n + \widetilde{\phi})} \right|^2 \tag{8}$$

Mit der Kreisfrequenz

$$\Delta\omega = 2\pi \cdot \Delta f \tag{9}$$

und durch Ausmultiplizieren erhält man für die Log-Likelihood-Funktion:

$$L(\widetilde{g}, \widetilde{\Delta\omega}, \widetilde{\phi}) = \sum_{v=0}^{N_{Sym}-1} \left( |r_v|^2 + \widetilde{g}^2 \cdot |a_v|^2 - 2 \cdot \mathrm{Re}\left\{ \widetilde{g} \cdot r_v \cdot a_v^* \cdot e^{-j(\widetilde{\Delta\omega} \cdot v \cdot T_n + \widetilde{\phi})} \right\} \right) \tag{10}$$

Da der Date-Aided-Fall vorliegt, ist die gesendete Symbolfolge **a** dem Empfänger bekannt. Die Abhängigkeit der Empfangsfolge r von der Symbolfolge **a** kann deshalb entfernt werden. Es wird dazu die modulationsbereinigte Folge **x** eingeführt mit

$$x_v = r_v \cdot a_v^* \tag{11}$$

Damit ergibt sich für die Log-Likelihood-Funktion:

$$L(\widetilde{g}, \widetilde{\Delta\omega}, \widetilde{\phi}) = \sum_{v=0}^{N_{Sym}-1} \left( |r_v|^2 + \widetilde{g}^2 \cdot |a_v|^2 - 2 \cdot \mathrm{Re}\left\{ \widetilde{g} \cdot x_v \cdot e^{-j(\widetilde{\Delta\omega} \cdot v \cdot T_n + \widetilde{\phi})} \right\} \right) \tag{12}$$

Nachfolgend wird nun gezeigt, daß das vorliegende mehrdimensionale Schätzproblem in unabhängige, eindimensionale Schätzprobleme aufgeteilt werden kann, d.h. daß Frequenz, Phase und Verstärkung voneinander separiert werden können.

Aus (12) erkennt man, daß Frequenz und Phase nur im letzten Term auftreten. Die vorliegende Log-Likelihood-Funktion wird daher bezüglich $\Delta f$ und $\phi$ minimiert, indem man den letzten Term maximiert. Da dabei die Verstärkung g und der Vorfaktor keinen Einfluß auf die Lage des Maximums haben, kann sie weggelassen werden. Man erhält so die äquivalente, zu maximierende Log-Likelihood-Funktion für die Frequenz- und Phasenschätzung:

$$L_1(\Delta\tilde{\omega},\tilde{\phi}) = \sum_{v=0}^{N_{Sym}-1} \mathrm{Re}\left\{x_v \cdot e^{-j(\Delta\tilde{\omega}\cdot v\cdot T_a + \tilde{\phi})}\right\} \qquad (13)$$

Die darin enthaltene Realteilbildung darf mit der Summation vertauscht werden:

$$L_1(\Delta\tilde{\omega},\tilde{\phi}) = \mathrm{Re}\left\{e^{-j\tilde{\phi}} \cdot \underbrace{\sum_{v=0}^{N_{Sym}-1} x_v \cdot e^{-j\cdot\Delta\tilde{\omega}\cdot v\cdot T_a}}_{Z}\right\} \qquad (14)$$

Diese Funktion ist maximal, wenn die Phase $\tilde{\phi}$ den komplexen Gesamtzeiger Z auf die Realteilachse dreht. Für die geschätzte Phase gilt daher:

$$\hat{\phi} = \arg\{Z\} = \arg\left\{\sum_{v=0}^{N_{Sym}-1} x_v \cdot e^{-j\cdot\Delta\hat{\omega}\cdot v\cdot T_a}\right\} \qquad (15)$$

Es ist also festzuhalten, daß die Log-Likelihood-Funktion $L_1$ aus (14) dadurch maximiert wird, daß die Frequenz $\Delta\tilde{\omega}$ den Betrag des Gesamtzeigers $|\vec{z}|$ maximiert und gleichzeitig $\vec{z}$ durch die optimale Phase auf die Realteilachse gedreht wird. Es ergibt sich daraus folgende, nur noch von der Frequenz abhängige Log-Likelihood-Funktion, welche wiederum zu maximieren ist:

$$L_2(\Delta\tilde{\omega}) = \left|\sum_{v=0}^{N_{Sym}-1} x_v \cdot e^{-j\cdot\Delta\tilde{\omega}\cdot v\cdot T_a}\right| \qquad (16)$$

Man erkennt nun eine Ähnlichkeit zwischen der vorliegenden Log-Likelihood-Funktion und der Fast Fourier Transformation FFT. Mit Hilfe der FFT kann die LLF für bestimmte diskrete Frequenzen berechnet werden.
Die Definition der FFT lautet

$$X_\mu = FFT\{x_v\} = \sum_{v=0}^{N_{FFT}-1} x_v \cdot e^{-j\cdot\frac{2\pi}{N_{FFT}}\cdot\mu\cdot v} \qquad (17)$$

mit

$$N_{FFT} = 2^k \qquad \text{und} \qquad k \in \mathrm{N} \qquad (18)$$

Die Quantisierung der FFT im Frequenzbereich, d.h. die Frequenzauflösung, beträgt dabei:

$$f_Q = \frac{1}{N_{FFT}\cdot T_a} \qquad (19)$$

Beim Vergleich der Summation aus (16) mit der FFT-Definition erkennt man, daß eine Äquivalenz vorliegt, falls $\Delta\tilde{\omega}$ auf eine der diskreten Frequenzen der FFT fällt.
Wenn also der Zusammenhang

$$\Delta\widetilde{\omega} \overset{!}{=} 2\pi \cdot \mu \cdot f_Q \qquad (20)$$

erfüllt ist, entspricht die zu maximierende LLF dem Betrag von $FFT\{x_\nu\}$ :

$$L_2(\Delta\widetilde{\omega}) = \left| \sum_{\nu=0}^{N_{Sym}-1} x_\nu \cdot e^{-j\cdot\Delta\widetilde{\omega}\cdot\nu\cdot T_a} \right| = \left| FFT\{x_\nu\} \right|_{f=\Delta\widetilde{f}} \qquad (21)$$

Dies bedeutet, daß die Frequenzschätzung in zwei Abschnitten durchgeführt werden kann. Zunächst wird ein grober Frequenzschätzwert $\hat{\Delta f}_{coarse}$ dadurch ermittelt, daß das Betragsmaximum der Fouriertransformierten von $x_\nu$ gesucht wird. Allerdings kann dabei ein Schätzfehler

$$\left| \Delta f_{rest} \right| \leq \frac{f_Q}{2} \qquad (22)$$

auftreten, wenn die zu schätzende Frequenz $\Delta f$ nicht genau einer der diskreten Frequenzen des Frequenzrasters der FFT entspricht.

Falls die FFT-Länge $N_{FFT}$ entsprechend groß ist, wird der verbleibende Schätzfehler $\Delta f_{rest}$ jedoch so klein, daß er in einer nachfolgenden Feinschätzstufe durch lineare Approximation ermittelt werden kann. Dabei stellt sich jedoch das Problem, daß eine Linearisierung der Betragsfunktion aus (16) nicht möglich ist.

Folgendes Hilfsmittel führt zur Lösung: Da die LLF aus (16) wegen der Betragsbildung reell und für alle $\Delta\widetilde{\omega}$ positiv ist, wird durch eine Quadrierung die Lage des Maximums der LLF nicht verändert. Es ergibt sich die äquivalente LLF

$$L_3(\Delta\widetilde{\omega}) = \left| \sum_{\nu=0}^{N_{Sym}-1} x_\nu \cdot e^{-j\cdot\Delta\widetilde{\omega}\cdot\nu\cdot T_a} \right|^2 , \qquad (23)$$

von der nachfolgend gezeigt wird, daß sie linearisierbar ist. Mit dem Zusammenhang

$$\left| z \right|^2 = z \cdot z^* \qquad (24)$$

für komplexe Größen erhält man für die vorliegende LLF:

$$L_3(\Delta\widetilde{\omega}) = \left( \sum_{\alpha=0}^{N_{Sym}-1} x_\alpha \cdot e^{-j\cdot\Delta\widetilde{\omega}\cdot\alpha\cdot T_a} \right) \cdot \left( \sum_{\beta=0}^{N_{Sym}-1} x_\beta \cdot e^{-j\cdot\Delta\widetilde{\omega}\cdot\beta\cdot T_a} \right)^*$$

$$= \sum_{\alpha=0}^{N_{Sym}-1} \sum_{\beta=0}^{N_{Sym}-1} x_\alpha \cdot x_\beta^* \cdot e^{-j\cdot\Delta\widetilde{\omega}\cdot(\alpha-\beta)\cdot T_a} \qquad \text{(reell!)} \qquad (24)$$

Nun werden die einzelnen Summenelemente von (24) in eine schematische Matrix eingetragen, die in Fig. 4 dargestellt ist.

Man erkennt dabei folgende Symmetrieeigenschaften:

- Die Haupt- und Nebendiagonalen besitzen einen jeweils identischen Drehzeiger $e^{-j\cdots}$
- Die Matrix ist hermetisch, d.h. die Matrixelemente M haben paarweise konjugiert komplexe Werte:

$$M_{\alpha,\beta} = M_{\beta,\alpha}^{*}$$

- Die Hauptdiagonale ist reell.

Diese Symmetrieeigenschaften lassen sich nutzen, indem man folgende alternative Summationsindizes ein-führt:

$$\nu = \alpha - \beta \qquad \text{und} \qquad \gamma \tag{25}$$

Mit Hilfe der Matrix veranschaulicht bedeutet dies, daß man nun nicht mehr über die Zeilen und Spalten der Matrix aufsummiert, sondern die Matrixelemente jeder Diagonalen aufsummiert und dann die Ergebnisse der einzelnen Diagonalen addiert. Dabei nutzt man für die Addition der paarweise konjugiert komplexen Werte zusätzlich folgende Beziehung:

$$z + z^{*} = 2 \cdot \mathrm{Re}\{z\} \tag{26}$$

Es ergibt somit sich die folgende, zu (24) äquivalente Darstellung:

$$L_{3}\left(\Delta\widetilde{\omega}\right) = \sum_{\gamma=0}^{N_{Sym}-1} \left|x_{\gamma}\right|^{2} + 2 \cdot \mathrm{Re}\left\{ \sum_{\nu=0}^{N_{Sym}-1} \sum_{\gamma=\nu}^{N_{Sym}-1} x_{\gamma} \cdot x_{\gamma-\nu}^{*} \cdot e^{-j\cdot\Delta\widetilde{\omega}\cdot\nu\cdot T_{a}} \right\} \tag{27}$$

Da der erste Term, der die Hauptdiagonale der Matrix beschreibt, nicht von der Frequenz abhängt, kann er zusammen mit dem Vorfaktor des zweiten Terms weggelassen werden, ohne das Maximum der LLF zu verschieben. Man erhält dadurch eine relativ einfache, geschlossene Darstellung:

$$L_{4}\left(\Delta\widetilde{\omega}\right) = \mathrm{Re}\left\{ \sum_{\nu=0}^{N_{Sym}-1} \underbrace{\sum_{\gamma=\nu}^{N_{Sym}-1} x_{\gamma} \cdot x_{\gamma-\nu}^{*}}_{x_{\nu} * x_{-\nu}^{*}} \cdot e^{-j\cdot\Delta\widetilde{\omega}\cdot\nu\cdot T_{a}} \right\} \tag{28}$$

In dieser LLF liegt eine (zyklische) Faltung der Form

$$y_{\nu} = x_{\nu} * x_{-\nu}^{*} \tag{29}$$

vor. Man erkennt, daß sich die Folge **y** mit Hilfe der Fouriertransformation berechnen läßt:

$$Y_{\mu} = FFT\{y_{\nu}\} = \left|X_{\mu}\right|^{2} = \left|FFT\{x_{\nu}\}\right|^{2} \tag{30}$$

Zusätzlich besitzt **y** nachstehende Eigenschaften:

- Konjugiert komplexe Symmetrie der Folgenglieder:

$$y_{-\nu} = y_{\nu}^{*} \tag{31}$$

- Die Folge **y** ist nur im Bereich

$$-\left(N_{Sym}-1\right)\le \nu \le N_{Sym}-1$$

$$(32)$$

ungleich Null

Mit der definierten Folge **y** vereinfacht sich die LLF zu:

$$L_4\left(\Delta\widetilde{\omega}\right)=\mathrm{Re}\left\{\sum_{\nu=0}^{N_{Sym}-1}y_\nu\cdot e^{-j\cdot\Delta\widetilde{\omega}\cdot\nu\cdot T_a}\right\}$$

$$(33)$$

Mit Hilfe dieser Form der LLF kann eine Feinschätzung durchgeführt werden. Für das Verständnis der Grobschätzung ist jedoch eine weitere Umformung der LLF hilfreich. Zunächst kann (26) angewendet werden, was zu folgender Darstellung der LLF führt:

$$L_4\left(\Delta\widetilde{\omega}\right)=\frac{1}{2}\cdot\left(\sum_{\nu=0}^{N_{Sym}-1}y_\nu\cdot e^{-j\cdot\Delta\widetilde{\omega}\cdot\nu\cdot T_a}+\sum_{\nu=0}^{N_{Sym}-1}y_\nu^\bullet\cdot e^{+j\cdot\Delta\widetilde{\omega}\cdot\nu\cdot T_a}\right)$$

$$(34)$$

Nun kann man die Symmetrieeigenschaft von **y** aus (31) nutzen:

$$L_4\left(\Delta\widetilde{\omega}\right)=\frac{1}{2}\cdot\left(\sum_{\nu=0}^{N_{Sym}-1}y_\nu\cdot e^{-j\cdot\Delta\widetilde{\omega}\cdot\nu\cdot T_a}+\sum_{\nu=-\left(N_{Sym}-1\right)}^{0}y_\nu\cdot e^{-j\cdot\Delta\widetilde{\omega}\cdot\nu\cdot T_a}\right)$$

$$=\frac{1}{2}\cdot\left(\sum_{\nu=-\left(N_{Sym}-1\right)}^{N_{Sym}-1}y_\nu\cdot e^{-j\cdot\Delta\widetilde{\omega}\cdot\nu\cdot T_a}+y_0\right)$$

$$(35)$$

Da der hintere Term $y_0$ und der Vorfaktor keinen Einfluß auf die Lage des Maximums der LLF haben, können sie weggelassen werden. Dadurch erhält man die äquivalente LLF:

$$L_5\left(\Delta\widetilde{\omega}\right)=\sum_{\nu=-\left(N_{Sym}-1\right)}^{N_{Sym}-1}y_\nu\cdot e^{-j\cdot\Delta\widetilde{\omega}\cdot\nu\cdot T_a}$$

$$(36)$$

Man erkennt, daß es sich dabei um die Fouriertransformation der Folge $y_\nu$ bei der Frequenz $\Delta\widetilde{f}$ handelt, da die Summationsgrenzen aufgrund der zyklischen Faltung der FFT verschiebbar sind. Somit gilt der Zusammenhang:

$$L_5\left(\Delta\widetilde{\omega}\right)=\sum_{\nu=0}^{2\cdot\left(N_{Sym}-1\right)}y_\nu\cdot e^{-j\cdot\Delta\widetilde{\omega}\cdot\nu\cdot T_a}=FFT\left\{y_\nu\right\}\big|_{f=\Delta\widetilde{f}}$$

$$(37)$$

Zusätzlich läßt sich ablesen, daß für die Mindestlänge dieser FFT gilt:

$$N_{FFT}\ge 2\cdot N_{Sym}-1$$

$$(38)$$

Bei kleinerem $N_{FFT}$ käme es zu Aliasing im Zeitbereich.

Jedoch sei bereits hier darauf hingewiesen, daß die Genauigkeit einer Grobschätzung mit dieser FFT-Länge nicht immer für eine sichere Konvergenz des iterativen Algorithmus der Feinschätzstufe ausreicht. Es ist deshalb entweder eine entsprechend größere FFT-Länge notwendig oder es muß entsprechend einer bevorzugten Weiterbildung des Verfahrens nach einer Frequenzgrobschätzung mit $N_{FFT} = 2 \cdot N_{Sym}$ die Frequenzauflösung entsprechend erhöht werden. Das Verfahren zur nachträglichen Verfeinerung der Frequenzauflösung der Grobschätzung ist weiter unten beschrieben.

Zusammengefaßt kann man aus den bisherigen Herleitungen erkennen, daß eine zweistufige Frequenzschätzung mit folgenden Schritten sinnvoll ist:

- Grobschätzung von $\tilde{\Delta f}$ mittels FFT

- Iterative Feinschätzung mittels linearer Interpolation

Die Grobschätzung wird in folgenden Schritten durchgeführt:

a) Berechne die modulationsbereinigte Folge **x** nach (11)

b) Erhöhe durch Zero-Padding (Einfügen von Nullen) am Ende der Folge die Länge von **x** auf die notwendige FFT-Länge $N_{FFT}$

c) Berechne die Fouriertransformierte $X_\mu = FFT\{x_\nu\}$

d) Suche nach (21) das Maximum von $|X_\mu|$. Die Betragsbildung ist allerdings numerisch aufwendig. Daher ist es sinnvoller, stattdessen nach (30) das Betragsquadrat von $X_\mu$ zu bilden:

$$Y_\mu = \left| X_\mu \right|^2$$

Die nun für $Y_\mu$ durchgeführte Maximumsuche liefert als Ergebnis den Index der diskreten Frequenz, bei der das Maximum vorliegt:

$$\mu_{max} = \arg\left\{\max\left(Y_\mu\right)\right\} \tag{39}$$

Daraus ergibt sich mit (19) der Grobschätzwert der Frequenz:

$$\hat{\Delta f}_{coarse} = \begin{cases} \mu_{max} \cdot f_Q & \text{für } \mu_{max} \leq N_{FFT}/2 \\ (\mu_{max} - N_{FFT}) \cdot f_Q & \text{für } \mu_{max} > N_{FFT}/2 \end{cases} \tag{40}$$

e) Berechne die Folge **y** mit Hilfe der inversen FFT:

$$y_\nu = IFFT\left\{Y_{\mu + \mu max}\right\} \tag{41}$$

f) Kompensiere die Folge **y** mit dem ermittelten Grobschätzwert der Frequenz:

$$y_{\nu,comp} = y_\nu \cdot e^{-j \cdot 2\pi \cdot \hat{\Delta f}_{coarse} \cdot \nu \cdot T_a} \tag{42}$$

Man erkennt mit (40), daß die grob frequenzkompensierte Folge $y_{comp}$ alternativ auch mit Hilfe des Modulationssatzes berechnet werden kann:

$$y_{v,comp} = IFFT\left\{Y_{\mu+\mu_{max}}\right\} \tag{43}$$

Nach der Kompensation der Folge **y** mit dem groben Frequenzschätzwert $\varDelta f_{coarse}$ verbleibt aufgrund der endlichen diskreten Frequenzauflösung der FFT der Frequenzversatz $\varDelta f_{fine}$, der von der Feinschätzstufe zu schätzen ist. Der Gesamtschätzwert setzt sich somit aus

$$\hat{\varDelta f} = \hat{\varDelta f}_{coarse} + \hat{\varDelta f}_{fine} \tag{44}$$

Dabei kann $\hat{\varDelta f}_{fine}$ durch Maximierung der zu (33) äquivalenten LLF

$$L_4\left(\varDelta \tilde{\omega}_{fine}\right) = \mathrm{Re}\left\{\sum_{v=0}^{N_{Sym}-1} y_{v,comp} \cdot e^{-j\cdot\varDelta\tilde{\omega}_{fine}\cdot v\cdot T_a}\right\} \tag{45}$$

ermittelt werden, indem man die Ableitung nach der Frequenz bildet und gleich Null setzt:

$$\left.\frac{\delta L_4\left(\varDelta\tilde{\omega}_{fine}\right)}{\delta\varDelta\tilde{\omega}_{fine}}\right|_{\varDelta\tilde{\omega}_{fine}=\varDelta\hat{\omega}_{fine}} = \mathrm{Re}\left\{\sum_{v=0}^{N_{Sym}-1} y_{v,comp} \cdot e^{-j\cdot\varDelta\hat{\omega}_{fine}\cdot v\cdot T_a} \cdot \left(-j\cdot v\cdot T_a\right)\right\} \overset{!}{=} 0 \tag{46}$$

Da durch eine entsprechende Wahl von $N_{FFT}$ der Grobschätzstufe das zu schätzende $\varDelta\omega_{fine}$ ausreichend klein ist, darf linearisiert werden. Wendet man die für kleine x zulässige Linearisierung der Exponentialfunktion

$$e^x \approx 1 + x \tag{47}$$

auf die vorliegende Gleichung an, so erhält man:

$$-T_a \cdot \mathrm{Re}\left\{\sum_{v=0}^{N_{Sym}-1} j\cdot v\cdot y_{v,comp} \cdot \left(1 - j\cdot\varDelta\hat{\omega}_{fine}\cdot v\cdot T_a\right)\right\} \overset{!}{=} 0$$

$$\mathrm{Re}\left\{\sum_{v=0}^{N_{Sym}-1} v^2\cdot y_{v,comp}\cdot\varDelta\hat{\omega}_{fine}\cdot T_a\right\} = -\mathrm{Re}\left\{\sum_{v=0}^{N_{Sym}-1} j\cdot v\cdot y_{v,comp}\right\}$$

$$\varDelta\hat{\omega}_{fine}\cdot T_a\cdot\mathrm{Re}\left\{\sum_{v=0}^{N_{Sym}-1} v^2\cdot y_{v,comp}\right\} = \mathrm{Im}\left\{\sum_{v=0}^{N_{Sym}-1} v\cdot y_{v,comp}\right\} \tag{48}$$

Daraus ergibt sich schließlich die gewünschte Berechnungsvorschrift für den Frequenz-Feinschätzwert:

$$\hat{\varDelta f}_{fine} = \frac{1}{2\pi\cdot T_a} \cdot \frac{\mathrm{Im}\left\{\sum_{v=0}^{N_{Sym}-1} v\cdot y_{v,comp}\right\}}{\mathrm{Re}\left\{\sum_{v=0}^{N_{Sym}-1} v^2\cdot y_{v,comp}\right\}} \tag{49}$$

Aufgrund des Linearisierungsfehlers der Feinschätzstufe entspricht der Gesamtschätzwert

$$\hat{\Delta f} = \hat{\Delta f}_{coarse} + \hat{\Delta f}_{fine}$$

nicht exakt der zu schätzenden Frequenz $\Delta f$. Eine Verbesserung schafft hier die iterative Anwendung des Feinschätzalgorithmus. Dadurch kann der Linearisierungsfehler beliebig verkleinert werden.

Die Feinschätzung der Frequenz in *nof_it* Iterationen läuft dabei in folgenden Schritten ab:

a) Berechne den Feinschätzwert $\hat{\Delta f}_{fine}^{\{it\}}$ der aktuellen Iteration nach der iterativ anwendbaren Berechnungsvorschrift aus (49)

$$\hat{\Delta f}_{fine}^{\{it\}} = \frac{1}{2\pi \cdot T_a} \cdot \frac{\operatorname{Im}\left\{ \sum_{\nu=0}^{N_{Sym}-1} \nu \cdot y_{\nu,comp}^{\{it\}} \right\}}{\operatorname{Re}\left\{ \sum_{\nu=0}^{N_{Sym}-1} \nu^2 \cdot y_{\nu,comp}^{\{it\}} \right\}} \qquad (50)$$

Für die erste Frequenzschätzung wird dabei die am Ausgang der Grobschätzstufe vorliegende, nur mit $\Delta f_{coarse}$ kompensierte Folge $y_{comp}$ verwendet, d.h.

$$y_{\nu,comp}^{\{1\}} = y_{\nu,comp} \qquad (51)$$

b) Addiere alle bisherigen Feinschätzwerte auf zu $\hat{\Delta f}_{fine\_total}$:

$$\hat{\Delta f}_{fine\_total} = \sum_{\alpha=1}^{it} \hat{\Delta f}_{fine}^{\{it\}} \qquad (52)$$

c) Bilde die für die nächste Feinschätzung benötigte Eingangsfolge durch Kompensation von $\boldsymbol{y}_{comp}$ mit $\hat{\Delta f}_{fine\_total}$:

$$y_{\nu,comp}^{\{it\}} = y_{\nu,comp} \cdot e^{-j \cdot 2\pi \cdot \hat{\Delta f}_{fine\_total} \cdot \nu \cdot T_a} \qquad (53)$$

d) Ist die gewünschte Iterationszahl *nof_it* noch nicht erreicht, so wird die nächste Iteration entsprechend Schritt a) bis c) durchgeführt.

e) Sobald *nof_it* Iterationen durchgeführt wurden, steht der Gesamt-Feinschätzwert $\hat{\Delta f}_{fine\_total}\Big|_{it=nof\_it}$ als Ausgangsgröße der iterativen Feinschätzstufe zur Verfügung.

Der gesuchte Gesamt-Frequenzschätzwert $\hat{\Delta f}$ für die zu schätzende Frequenz $\Delta f$ berechnet sich aus den Ergebnissen der Grob- und Feinschätzung:

$$\hat{\Delta f} = \hat{\Delta f}_{coarse} + \hat{\Delta f}_{fine\_total}\Big|_{it=nof\_it} \qquad (54)$$

Nach erfolgter Schätzung der Frequenz kann mit dem Frequenzschätzwert $\hat{\Delta f}$ die Phase $\phi$ nach (15) geschätzt werden:

$$\hat{\phi} = \arg\left\{ \sum_{\nu=0}^{N_{Sym}-1} x_\nu \cdot e^{-j \cdot \Delta\hat{\omega} \cdot \nu \cdot T_a} \right\} \qquad (55)$$

Die Schätzung der Verstärkung *g* wird der Vollständigkeit halber hier mit aufgeführt.

Zur Schätzung der Verstärkung muß die Log-Likelihood-Funktion (12) maximiert werden. Dazu wird die Ableitung der LLF nach $\tilde{g}$ gleich Null gesetzt:

$$\left.\frac{\partial L(\hat{g}, \Delta\tilde{\omega}, \tilde{\phi})}{\partial \tilde{g}}\right|_{\tilde{g}=\hat{g}\,:\,\Delta\tilde{\omega}=\Delta\hat{\omega}\,:\,\tilde{\phi}=\hat{\phi}} \overset{!}{=} 0$$

$$\sum_{v=0}^{N_{Sym}-1} \left(2\cdot\hat{g}\cdot|a_v|^2 - 2\cdot\mathrm{Re}\left\{x_v\cdot e^{-j(\Delta\hat{\omega}\cdot v\cdot T_n+\hat{\phi})}\right\}\right) \overset{!}{=} 0 \qquad (56)$$

Daraus berechnet sich mit den zuvor ermittelten Frequenz- und Phasenschätzwerten der Schätzwert für die Verstärkung als:

$$\hat{g} = \frac{\displaystyle\sum_{v=0}^{N_{Sym}-1} \mathrm{Re}\left\{x_v\cdot e^{-j(\Delta\hat{\omega}\cdot v\cdot T_n+\hat{\phi})}\right\}}{\displaystyle\sum_{v=0}^{N_{Sym}-1} |a_v|^2} \qquad (57)$$

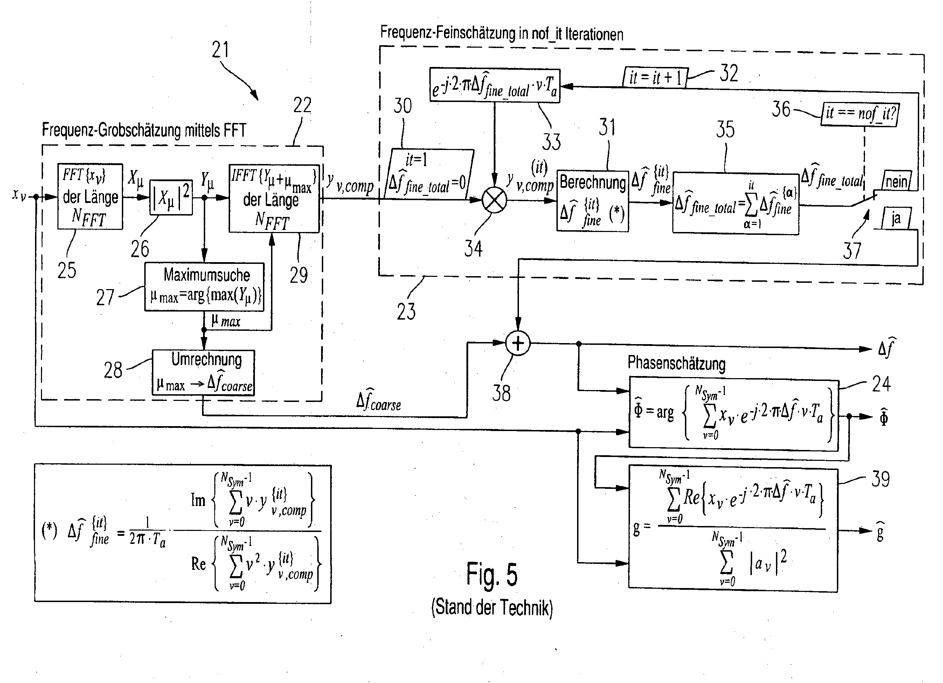

Der vorstehend ausführlich beschriebene Ablauf der Frequenz- und Phasenschätzung mit dem universellen Maximum-Likelihood-Schätzer ist in Fig. 5 schematisch dargestellt.

Das in Fig. 5 dargestellte Blockschaltbild Frequenz- und Phasenschätzers 1 teilt sich in einen Frequenz-Grobschätzer 22, einen Frequenz-Feinschätzer 23 und einen Phasenschätzer 24 auf. Dem Frequenz-Grobschätzer 22 wird die digitale Eingangs-Signalfolge $x_v$ zugeführt. In einem Block 25 erfolgt eine diskrete Fourier-Transformation, vorzugsweise eine schnelle Fourier-Transformation *FFT*. Die Länge der Fourier-Transformation muß mindestens doppelt so lang sein, wie die Länge der Eingangs-Signalfolge $x_v$, d. h. es muß gelten $N_{FFT} \geq 2\cdot N_{sym}-1$. Durch die Fourier-Transformation entsteht im Frequenzraum die Fourier-Folge $X_\mu$. In dem Block 26 erfolgt eine Betragsbildung oder Betragsquadratbildung. In einem Block 27 wird das Maximum des Betrags der Fourier-Folge oder, da dies numerisch einfacher und äquivalent ist, das Maximum des Betragsquadrats der Fourier-Folge gesucht.

Der Index $\mu_{max}$ des diskreten Werts $Y_{\mu,max}$ der Fourier-Folge, bei welchem das Maximum des Betrags bzw. Betragsquadrats vorliegt wird an dem Block 28 weitergegeben, in welchem eine Umrechnung in den Grobschätzwert $\Delta\hat{f}_{coarse}$ der Frequenz gemäß Formel (40) vorgenommen wird. In dem Block 29 erfolgt eine inverse Fourier-Transformation, jedoch nicht der ursprünglichen Betragsquadrat-Fourier-Folge $Y_\mu$, sondern der um den dem Maximum entsprechenden Index $\mu_{max}$ verschobenen Fourier-Folge $Y_\mu+\mu_{max}$. Nach Kompensation mit Formel (42) entsteht die rücktransformierte Signalfolge $y_{v,comp}$.

Durch den Feinschätzer 23 erfolgt eine Feinschätzung der Frequenz. Dargestellt ist der bevorzugte Fall des iterativen Vorgehens. In einem Block 30 wird zunächst der Iterationszähler *it* auf 1 und der gesamte Feinschätzwert $\Delta\hat{f}_{fine\_total}$ auf Null gesetzt. In einem Block 31 erfolgt eine Berechnung des Feinschätzwerts der Frequenz gemäß Formel (50). Für den nächsten Iterationsschritt wird der Iterationszähler it im Block 32 inkrementiert. In Block 33 wird der in Formel (53) benötigte Kompensationsfaktor zur Verfügung gestellt. Die Kompensation entsprechend Formel (53) erfolgt schließlich durch den Multiplizierer 34.

Nach Berechnung des Feinschätzwert-Iterationsbeitrags dieser Iterationsstufe nach Formel (50) in Block 31 werden im Block 35 die Feinschätzwert-Iterationsbeiträge der einzelnen Iterationsstufen zum Feinschätzwert-Gesamtwert $\Delta\hat{f}_{fine\_total}$ aufaddiert. Hat der Iterationszähler *it* die Anzahl der vorgegebenen Iterationsstufen *nof_it* erreicht, so wird der Feinschätzwert-Gesamtbetrag über den nur symbolisch dargestellten Schalter 37 ausgegeben und in dem Addierer 38 mit dem Grobschätzwert zur Erzeugung eines Gesamtschätzwerts der Frequenz addiert.

Der Gesamtschätzwert der Frequenz und die Eingangs-Signalfolge werden dem Phasenschätzer 24 zugeführt, der entsprechend Formel (55) den Schätzwert der Phase berechnet.

Der Schätzwert der Phase kann zusammen mit der Eingangs-Signalfolge dem Block 25 zugeführt werden, der den Schätzwert für die Verstärkung gemäß Formel (57) berechnet.

Bei der Frequenz-Grobschätzung des erfindungsgemäßen universellen Maximum-Likelihood-Schätzers wird der Frequenzschätzwert mit Hilfe einer Fast-Fourier-Transformation ermittelt. Dabei ist nach (38) zu beachten, daß eine minimale FFT-Länge von

$$N_{FFT} \geq 2 \cdot N_{Sym} - 1$$

eingehalten werden muß, um Aliasing-Effekte im Zeitbereich zu vermeiden. Jedoch kann diese FFT-Länge nicht ausreichen. Aufgrund eines zu großen maximalen Schätzfehlers $\Delta f_{rest,max}$ am Ausgang der Grobschätzstufe ist bei dieser FFT-Länge eine sichere Konvergenz des nachfolgenden iterativen Feinschätzalgorithmus nicht immer gewährleistet. Der zusätzliche Rechenaufwand und Speicherbedarf durch eine entsprechende Erhöhung der FFT-Länge in der Grobschätzstufe wäre jedoch beträchtlich.

Eine Abhilfe stellt das nachfolgende Verfahren als vorteilhafte Weiterbildung des erfindungsgemäßen Verfahrens dar. Hierbei wird zunächst unter Beachtung von (18) eine Grobschätzung mit

$$N_{FFT} = 2 \cdot N_{Sym} \tag{58}$$

durchgeführt. Mit geringem Zusatzaufwand wird dann durch Maximierung der entsprechenden LLF bei bestimmten Frequenzen die selbe Frequenzauflösung und damit auch die selbe Schätzgenauigkeit wie bei einer Grobschätzung mit $N_{FFT} = 4 \cdot N_{Sym}$ erreicht. Damit ist sowohl die Konvergenz des Feinschätzalgorithmus als auch die Einhaltung festgelegter Genauigkeitsgrenzen sicher gewährleistet.

Die FFT der Grobschätzstufe mit der FFT-Länge hat nach (19) eine Frequenzauflösung von

$$f_Q = \frac{1}{N_{FFT} \cdot T_a} = \frac{1}{2 \cdot N_{Sym} \cdot T_a} \tag{59}$$

Ziel ist es nun, diese Auflösung im Bereich um den gefundenen Grobschätzwert $\Delta \hat{f}_{coarse}$ nachträglich zu verdoppeln und dadurch den maximalen verbleibenden Frequenzversatz $\Delta f_{rest,max}$ am Ausgang des Grobschätzers 22 zu halbieren.

Ausgangspunkt ist wie bei der Feinschätzung die Log-Likelihood-Funktion nach (45), bei der bereits die Kompensation mit dem Grobschätzwert $\Delta \hat{f}_{coarse}$ berücksichtigt ist:

$$L_4 \left( \widetilde{\Delta f} \right) = \mathrm{Re} \left\{ \sum_{v=0}^{N_{Sym}-1} y_{v,comp} \cdot e^{-j \cdot 2\pi \cdot \widetilde{\Delta f} \cdot v \cdot T_a} \right\} \tag{60}$$

Durch Maximierung dieser LLF erhält man einen Schätzwert für den verbleibenden Frequenzversatz

$$\Delta f_{rest} = \Delta f - \Delta \hat{f}_{coarse} \tag{61}$$

am Ausgang der Grobschätzstufe.

Die angesprochene Verdopplung der Frequenzauflösung gegenüber der Auflösung $f_Q$ des Grobschätzers erreicht man nun dadurch, daß man die Funktionswerte der LLF $L_4$ bei den Frequenzen

$$f_{+\frac{1}{2} \cdot Q} = +\frac{f_Q}{2} = +\frac{1}{4 \cdot N_{Sym} \cdot T_a} \tag{62}$$

und

$$f_{-\frac{1}{2} \cdot Q} = -\frac{f_Q}{2} = -\frac{1}{4 \cdot N_{Sym} \cdot T_a} \tag{63}$$

berechnet und mit dem Funktionswert von $L_4$ bei $f = 0$ vergleicht. Aus den drei Frequenzen wird jene als Schätzfrequenz

$\Delta \hat{f}_{\mathrm{int}}$ ausgewählt, bei der die LLF den größten Wert aufweist und die somit der zu schätzenden Frequenz $\Delta f_{rest}$ am nächsten kommt. Der nach der Kompensation der Folge $y_{comp}$ mit dem Schätzwert $\Delta \hat{f}_{\mathrm{int}}$ noch verbleibende Frequenzversatz wird anschließend von dem vorzugsweise iterativ arbeitenden Feinschätzer 23 ermittelt.

Mit anderen Worten wird durch das obige Verfahren untersucht, ob eine der Frequenzen $\Delta \hat{f}_{coarse} \pm 0,5 \cdot f_Q$ genauer als $\Delta \hat{f}_{coarse}$ der vom universellen Maximum-Likelihood-Schätzer zu schätzenden Frequenz $\Delta f$ entspricht. Somit erreicht man die selbe Auflösung und Schätzgenauigkeit wie bei einer Grobschätzung mit $N_{FFT}=4 \cdot N_{Sym}$.

Mathematisch läßt sich die Ermittlung des Schätzwertes $\Delta \hat{f}_{\mathrm{int}}$ zur nachträglichen Erhöhung der Frequenzauflösung wie folgt darstellen:

$$\Delta \hat{f}_{\mathrm{int}} = \arg_{\Delta \tilde{f}_{\mathrm{int}}} \left\{ \max \left( \left. L_4\left(\Delta \tilde{f}_{\mathrm{int}}\right)\right|_{\Delta \tilde{f}_{\mathrm{int}}=f_{+\frac{1}{2}\cdot Q}\,;\,\Delta \tilde{f}_{\mathrm{int}}=f_{-\frac{1}{2}\cdot Q}\,;\,\Delta \tilde{f}_{\mathrm{int}}=0} \right) \right\}$$

$$= \arg_{\Delta \tilde{f}_{\mathrm{int}}} \left\{ \max \left( \operatorname{Re} \left\{ \sum_{\nu=0}^{N_{Sym}-1} y_{\nu,comp} \cdot e^{-j \cdot 2\pi \cdot \Delta \tilde{f}_{\mathrm{int}} \cdot \nu \cdot T_a} \right\} \Bigg|_{\Delta \tilde{f}_{\mathrm{int}}=f_{+\frac{1}{2}\cdot Q}\,;\,\Delta \tilde{f}_{\mathrm{int}}=f_{-\frac{1}{2}\cdot Q}\,;\,\Delta \tilde{f}_{\mathrm{int}}=0} \right) \right\} \quad (64)$$

Für eine effizientere Implementierung z.B. auf einem digitalen Signalprozessor kann durch Vertauschung von Realteilbildung und Summation wie folgt weiter vereinfacht werden:

$$\Delta \hat{f}_{\mathrm{int}}$$
$$= \arg_{\Delta \tilde{f}_{\mathrm{int}}} \left\{ \max \left( \left. \sum_{\nu=0}^{N_{Sym}-1} \operatorname{Re}\{y_{\nu,comp}\} \cdot \cos\left(2\pi \cdot \Delta \tilde{f}_{\mathrm{int}} \cdot \nu \cdot T_a\right) - \operatorname{Im}\{y_{\nu,comp}\} \cdot \sin\left(2\pi \cdot \Delta \tilde{f}_{\mathrm{int}} \cdot \nu \cdot T_a\right) \right|_{\substack{\Delta \tilde{f}_{\mathrm{int}}=f_{+\frac{1}{2}\cdot Q}\,;\\ \Delta \tilde{f}_{\mathrm{int}}=f_{-\frac{1}{2}\cdot Q}\,;\\ \Delta \tilde{f}_{\mathrm{int}}=0}} \right) \right\}$$

$$(65)$$

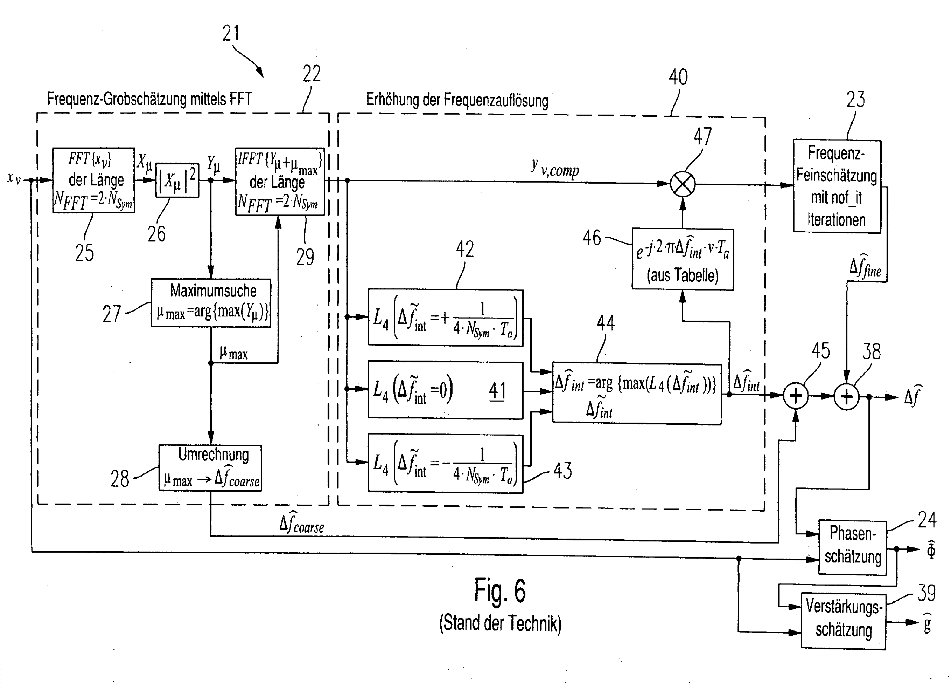

Der gesamte Ablauf des Verfahrens ist schematisch in Fig. 6 zusammengefaßt.

In Fig. 6 ist zunächst der Frequenz-Grobschätzer 22, der Frequenz-Feinschätzer 23 und der Phasenschätzer 24 sowie der Verstärkungs-Schätzer 25 in gleicher Weise wie in Fig. 5 dargestellt. Die diesbezüglichen Elemente sind mit gleichen Bezugszeichen versehen, so daß sich insoweit eine wiederholende Beschreibung erübrigt.

Im Unterschied zu Fig. 5 ist zwischen dem Frequenz-Grobschätzer 22 und dem Frequenz-Feinschätzer 23 zur Erhöhung der Frequenzauflösung der Block 40 eingeschoben. In dem Block 40 wird nicht nur im Block 41 entsprechend Formel (45) die Log-Likelihood-Funktion $L_4$ an der Stelle des Grobschätzwerts berechnet, sondern in den Blöcken 42 und 43 wird die Log-Likelihood-Funktion $L_4$ entsprechend Formel (60) in Verbindung mit Formel (62) bzw. (63) auch eine halbe Schrittweite der Quantisierung $f_Q$ der *FFT* neben dem Grobschätzwert berechnet. In einem Block 44 wird das Maximum dieser drei Alternativen von $L_4$ bestimmt und durch die arg-Funktion daraus der Frequenzbeitrag $\Delta \hat{f}_{\mathrm{int}}$ ermittelt, der in dem Addierer 45 zu den Grobschätzwert der Frequenz addiert wird.

Die sich daraus ergebenden Phasenkompensationswerte stehen in dem Block 46 in einer Tabelle zur Verfügung und die Signalfolge $y_{\nu,comp}$ wird in dem Multiplizierer 47 mit diesem Kompensationswerten multipliziert.

Nachfolgend wird auf die erfindungsgemäße Weiterbildung des universellen Frequenzschätzers eingegangen. Bei diesem Schätzer wird durch entsprechende Maßnahmen der Signalverarbeitungsaufwand - je nach Beobachtungslänge - überschlägig um mindestens den Faktor 8 reduziert.

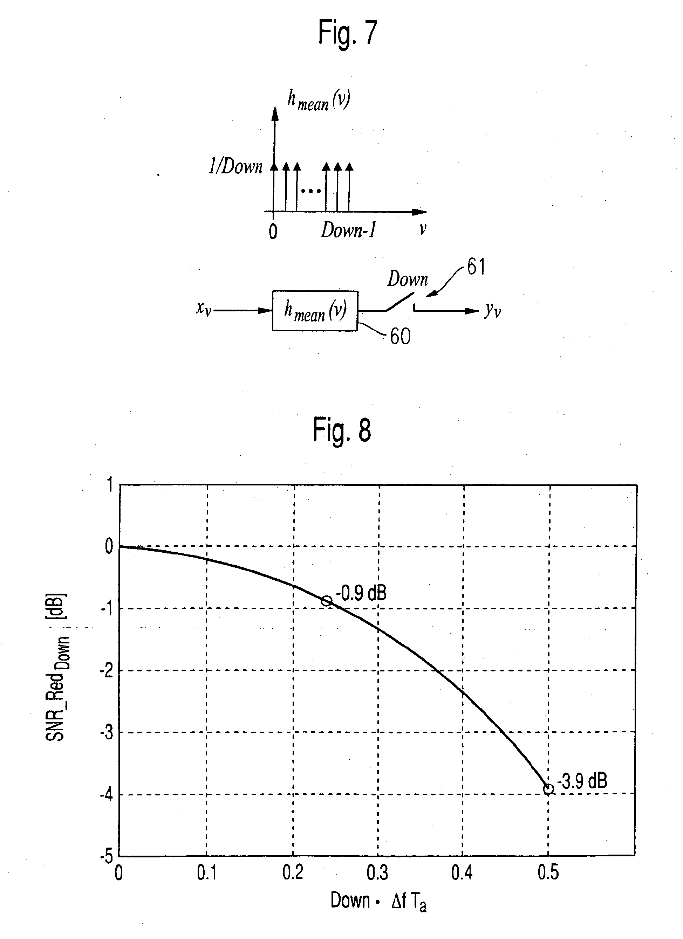

Eine zentrale Rolle zur Reduktion des Signalverarbeitungsaufwands spielt das Mittelungsfilter 60 mit nachfolgender Dezimation in einem Abtastratenreduzierer 61, welche in Fig. 7 dargestellt sind. Aus diesem Grund wird zuerst auf die wichtigen systemtheoretischen Eigenschaften eingegangen. Die Eingangsfolge

$$x_v = e^{j\Delta\omega \cdot v T_a} + n_v \qquad (66)$$

wird auf das Mittelungsfilter 60 mit der Impulsantwort

$$h_{mean}(v) = \sum_{\mu=0}^{Down-1} \delta(v-\mu) \qquad (67)$$

gegeben. Das Mittelungsfilter 60 führt somit, wie in Fig. 7 oben skizziert, eine Mittelung über *Down* Abtastwerte durch. Anschließend wird im Abtastratenreduzierer 61 das Downsampling um den Faktor *Down* durchgeführt und es entsteht die Ausgangsfolge

$$y_v = Ampl\_Red_{Down} \cdot e^{j\Delta\omega \cdot v \overline{\frac{T_a}{Down \cdot T_a}}} + m_v \; . \qquad (68)$$

Nach dem Abtasttheorem kann aus der Ausgangsfolge $y_v$ der um den Faktor *Down* reduzierte Frequenzbereich

$$-0.5/Down < \Delta f \cdot T_a < 0.5/Down \qquad (69)$$

eindeutig bestimmt werden. Im Umkehrschluß darf *Down* bei einem zu schätzenden Frequenzversatz *Δf* nur so groß gewählt werden, daß die Bedingung

$$Down \overset{!}{<} 0.5 \, / \, |\Delta f \cdot T_c| \qquad (70)$$

eingehalten wird.

Weiterhin erkennt man aus Gleichung (68), dass sich die Amplitude um den Faktor $Ampl\_Red_{Down}$ reduziert wird. Es läßt sich zeigen, dass sich die Amplituden-Reduktion durch

$$Ampl\_Red_{Down} = \text{sinc}(\, Down \cdot \Delta f T_a\,) \qquad (71)$$

ergibt. Die Berechnungsformel ist für diese Betrachtung eine ausreichende Näherung und liefert bei kleinem *Down* etwas kleinere Werte. Probe: Es sei $Down \cdot \Delta f T_a = 1$, d.h. der Drehzeiger $x_v$ dreht sich innerhalb der Mittelungsdauer um $2\pi$. In diesem Fall wird $y_v = 0$, was durch Auswertung von Gleichung (71) gemäß $Ampl\_Red_{Down} = 0$ bestätigt wird.

Damit ergibt sich die Reduktion des Signal/Rausch-Verhältnisses SNR von

$$SNR\_Red_{Down} = 20 \cdot \log 10(\, Ampl\_Red_{Down}\,) \; , \qquad (72)$$

welche in Fig. 8 gezeigt wird. Man erkennt, dass im ungünstigsten Fall nach Gleichung (68) für die maximal schätzbare Frequenz von $Down \cdot \Delta f T_a = 0.5$ eine Störabstands-Reduktion von 3.9 dB auftritt.

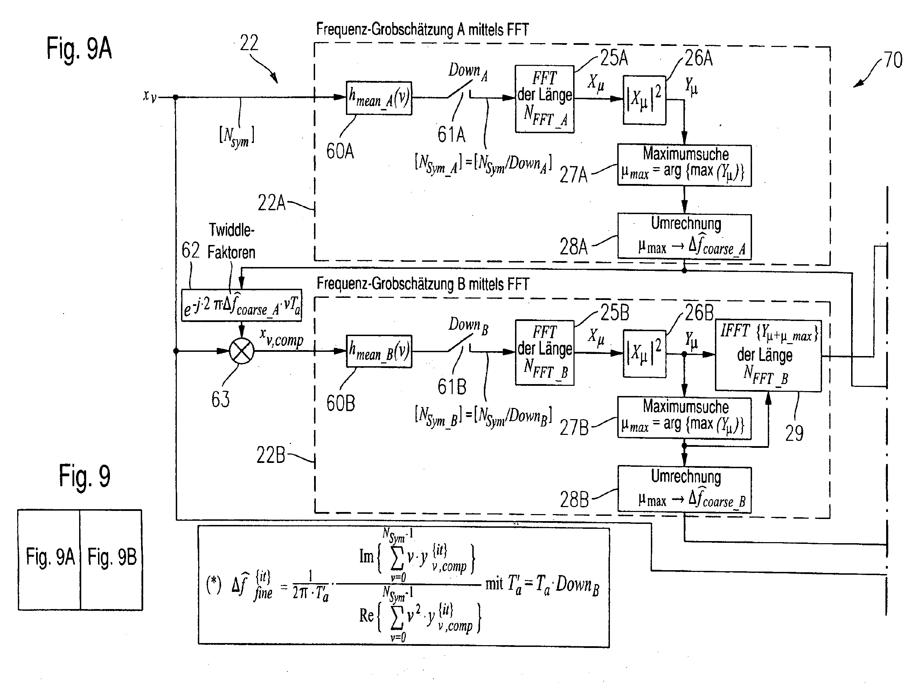

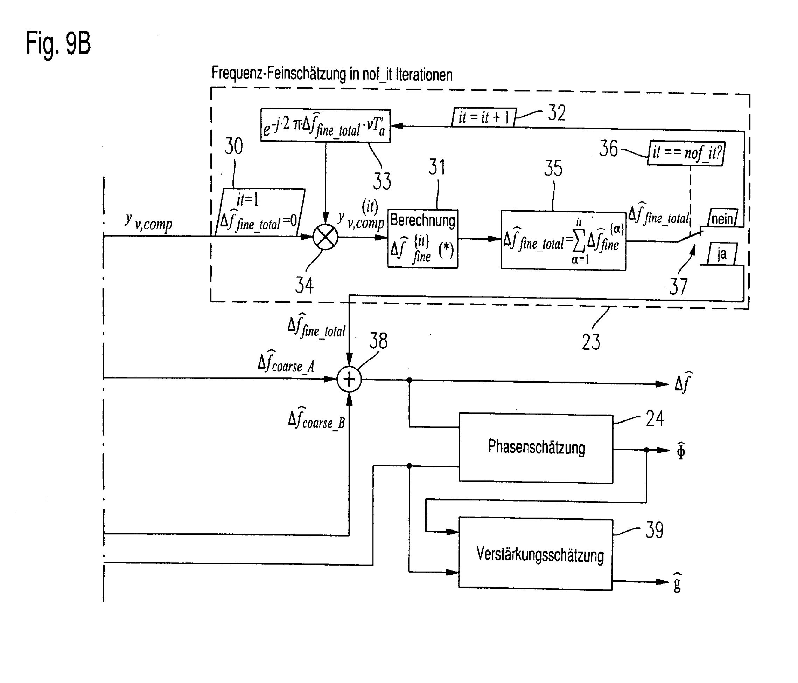

Diese Grundlagen sind zum Verständnis des erfindungsgemäßen, aufwandsreduzierten, universellen Frequenzschätzers 70 notwendig. Ein Blockschaltzbild des erfindungsgemäßen Schätzers ist in Fig. 9 angegeben. Bereits beschriebene Elemente sind mit übereinstimmenden Bezugszeichen bezeichnet, so dass sich eine wiederholende Beschreibung erübrigt. Zuerst wird von der Eingangsfolge $x_v$ eine Frequenz-Grobschätzung A mittels einer schnellen Fouriertransformation FFT durchgeführt. In diesem Block 22A wird am Eingang eine Mittelungsfilterung 60A mit nachfolgendem Downsampling im Abtastratenreduzierer 61A um den Faktor $Down_A$ durchgeführt. Die Impulsantwort $h_{mean\_A}(v)$ besteht, wie in Fig. 7 veranschaulicht, aus Dirac-Impulsen der Länge $Down_A$. Nach dem Downsampling um den Faktor $Down_A$ beträgt die reduzierte Länge der Zeitfolge

$$N_{Sym\_A} = N_{Sym}/Down_A \; . \qquad (73)$$

Anschließend folgt im Block 25A die bereits behandelte grobe Frequenzschätzung mittels FFT der Länge $N_{FFT\_A}$ mit dem Schätzwert $\hat{\Delta f}_{coarse\_A}$ .

Es ist empfehlenswert, die FFT-Länge gemäß

$$N_{FFT\_A} \geq N_{sym}/Down_A$$

$$(74)$$

sehr kurz zu wählen, d.h. es wird kein Zero-Padding durchgeführt. Für die nachfolgenden Überlegungen werde zuerst zwecks Einfachheit von

$$Down_A = 1$$

ausgegangen. Damit wird die FFT-Länge gegenüber den bisher betrachteten universellen Frequenzschätzer um den Faktor 4 bzw. 2 reduziert. Diese kleine FFT-Länge ist in diesem Fall zulässig, weil die mittels IFFT bestimmte Zeitfolge $y_{v,comp}$ nicht im Block 22A berechnet wird und damit nicht die Bedingung $N_{FFT\_A} \geq 2N_{sym}/Down_A$ eingehalten werden muß, siehe Gleichung (38).

Im ungünstigsten Fall (Worst-Case) liegt die zu schätzende Frequenz $\Delta f$ genau in der Mitte des diskreten FFT-Frequenzrasters von Block 22A, d.h. der FFT-Betragspeak ist um

$$Ampl\_Red_{grid} = \mathrm{sinc}(0.5) = 0.63$$
$$\mathrm{bzw.}$$
$$SNR\_Red_{grid} = -3.9\,\mathrm{dB}$$

$$(75)$$

gedämpft. Diese Dämpfung ist in der Regel nicht schädlich, weil das Maximum weit über dem Rauschteppich (Noise-Floor) liegt und damit sicher detektiert wird.

Zusätzlich darf nach Gleichung (74) die FFT-Länge für

$$Down_A > 1$$

zusätzlich um den Faktor $Down_A$ reduziert werden, wenn der Schätzbereich von $\Delta f$ eingeschränkt ist. Der maximal zulässige Downsampling-Faktor ergibt sich nach Gleichung (70). Dabei ist allerdings zu beachten, dass sich die Gesamt-SNR-Reduktion durch die SNR-Reduktion durch den diskreten FFT-Grid nach in Gleichung (75) und die SNR-Reduktion durch das Downsamping nach Gleichung (72) gemäß

$$Ges\_SNR\_Red = SNR\_Red_{grid} + SNR\_Red_{Down} \quad [\mathrm{dB}] \qquad (76)$$

ergibt. Damit beträgt die Gesamt-SNR-Reduktion im ungünstigsten Fall

$$Ges\_SNR\_Red_{max} = -3.9\,\mathrm{dB} - 3.9\,\mathrm{dB} = -7.8\,\mathrm{dB} \qquad (77)$$

Bei zu großer Gesamt-SNR-Reduktion, d.h. das Maximum verschwindet im Noise-Floor läßt sich die SNR-Reduktion $SNR\_Red_{Down}$ durch $Down_A = 1$ vermeiden.

Damit die im Block 22A angesprochene Gesamt-SNR-Reduktion nicht zu einer Verschlechterung von $\hat{\Delta f}$ führt, wird eine zweite Grobschätzung im Block 22B durchgeführt. Eine vorhergehende Maßnahme besteht darin, dass vorher die Eingangsfolge $x_v$ mit dem vorher bestimmten Grobschätzwert $\hat{\Delta f}_{coarse\_A}$ kompensiert wird, der im Block 62 ermittelt und im Multiplizierer 63 mit der Eingangsfolge $x_v$ multipliziert wird. Diese Frequenz-Kompensation kostet nur geringen Signalverarbeitungsaufwand, weil die Drehzeiger nicht berechnet werden müssen, sondern bereits als sog. Twiddle-Faktoren der FFT vorliegen.

Im Block 22B wird die zweite Frequenz-Grobschätzung durchgeführt. Zur Funktionsweise der Blöcke 22A und 22B im einzelnen wird auf die Beschreibung in Fig. 5 verwiesen. Nach der Mitteilung in dem Mitteilungsfilter 60B und dem Downsampling im Abtastratenreduzierer 61B um den Faktor $Down_B$ beträgt die reduzierte Länge der Zeitfolge

$$N_{Sym\_B} = N_{Sym}/Down_B \,. \qquad (78)$$

Anschließend wird die FFT der Länge $N_{FFT\_B}$ berechnet. Wie bereits beim universellen Frequenzschätzer nach Fig. 5 wird auch hier die FFT-Länge

$$N_{FFT\_B} \geq 4 \cdot N_{Sym\_B}$$

$$(79)$$

empfohlen, um die sichere Konvergenz der nachfolgende Feinschätzung zu gewährleisten. Im Prinzip kann die FFT-Länge halbiert werden, wenn im FFT-Maximum der linke und rechte Nachbarwert im halben Stützstellenabstand berechnet wird, siehe Fig.6. Allerdings lohnt sich dieser Aufwand kaum, weil die FFT-Länge $N_{FFT\_B}$ ohnehin sehr klein sein ist.

Als Ergebnis von Block 22B liegt der Frequenz-Schätzwert $\hat{\Delta f}_{coarse\_B}$ vor. Weiterhin wird die kompensierte Zeitfolge $y_{v,comp}$ mittels IFFT bestimmt, welche anschließend zur Berechnung des Feinschätzwertes $\hat{\Delta f}_{fine}$ benötigt wird. Bei der in Fig. 9 gezeigten Berechnungsformel gilt es zu beachten, daß die Abtastperiode nach dem Downsamping gemäß

$$T_a' = T_a \cdot Down_B \qquad (80)$$

eingesetzt werden muß.

Nach der iterativen Berechnung des Feinschätzwertes wird der gesuchte Schätzwert schließlich durch

$$\hat{\Delta f} = \hat{\Delta f}_{coarse\_A} + \hat{\Delta f}_{coarse\_B} + \hat{\Delta f}_{fine\_total} \qquad (81)$$

berechnet, die dies anhand von Fig. 5 vorstehend bereits beschrieben wurde.

Nachfolgend wird erklärt, wie groß $Down_B$ gewählt werden darf und welche Performance zu erwarten ist. Bei der nach Gleichung (74) gewählten FFT-Länge $N_{FFT\_A}$ liegt im ungünstigsten Fall die zu schätzende Frequenz $\Delta f$ genau in der Mitte des diskreten FFT-Frequenzrasters, d.h. der maximale Frequenzfehler von $\hat{\Delta f}_{coarse\_A}$ im Block 22A beträgt

$$f_{err,\max} = 0.5 \cdot \underbrace{\frac{1}{N_{Sym} \cdot T_a}}_{\text{Gridabstand } f_0} , \qquad (82)$$

was innerhalb der Beobachtungsdauer zu einem Phasendrift von

$$phase_{err,\max} = 2\pi \cdot f_{err,\max} \cdot \underbrace{N_{Sym} T_a}_{\text{Beobachtungsdauer}} = \pi \qquad (83)$$

führt. Dieser Phasendrift liegt somit in der kompensierten Eingangsfolge $x_{v,comp}$ vor. Folglich driftet die Phase innerhalb der Mittelungsdauer des nachfolgenden Mittelungsfilters 60B im Block 22B um

$$\underbrace{\frac{\pi}{N_{Sym}}}_{\substack{\text{Phasendrift} \\ \text{pro} \\ \text{Abtastperiode}}} \cdot Down_B = \frac{\pi}{N_{Sym\_B}} , \qquad (84)$$

was in $x_{v,comp}$ zu einer Amplituden-Reduktion von

$$Ampl\_Red = \text{sinc}(\tfrac{0.5}{N_{Sym\_B}})$$

$$(85)$$

führt. Im Ergebnis bedeutet dies, es darf unabhängig von der Eingangslänge $N_{Sym}$ auf wenige Samples $N_{Sym\_B}$ ohne einen merklichen Verlust downgesampelt werden. Die genaue Berechnung folgt unten.

Nun soll die Standard-Abweichung vom Frequenzschätzer hergeleitet werden: Die Cramér-Rao-Grenze der Standardabweichung vom Frequenzversatz ist durch

$$\sigma_{\Delta f T_a}^{\text{Cramer-Rao}} = \frac{1}{2\pi} \sqrt{\frac{6}{N_{sym} \cdot (N_{sym}^2 - 1) \cdot S/N}}$$

$$(86)$$

gegeben. Durch folgende Zusatz-Überlegungen kann nun die gesuchte Standard-Abweichung hergeleitet werden:

- Die Abtastperiode nach dem Mittelungsfilter 60B beträgt $T'_a = T_a \cdot Down_B$.
- Durch das Mittelungsfilter 60B im Block 22B erhöht sich der Störabstand der Ausgangsfolge um den Faktor $Down_B$.
- Allerdings muß die Amplituden-Reduktion $Ampl\_Red$ vom Mittelungsfilter 22B nach Gleichung (85) berücksichtigt werden.
- Nach dem Mittelungsfilter 60B stehen zur FrequenzSchätzung nur noch $N_{Sym\_B}$ Abtastwerte zur Verfügung.

Somit ergibt sich die Standard-Abweichung des Frequenzschätzer 70 gemäß

$$\underbrace{\sigma_{\Delta f T'_a}}_{\substack{\text{Beachte:} \\ T'_a = Down_B \cdot T_a}} = \frac{1}{Ampl\_Red} \cdot \frac{1}{2\pi} \sqrt{\frac{6}{N_{sym\_B} \cdot (N_{sym\_B}^2 - 1) \cdot \underbrace{S/N \cdot Down_B}_{\text{SNR nach Dezimation}}}}$$

$$(87)$$

Durch Umrechnung auf die gewünschte Normierung $\sigma_{\Delta \hat{f} \cdot T_a}$ ergibt sich

$$\sigma_{\hat{\Delta fT_a}} = \frac{1}{Ampl\_Red} \cdot \frac{1}{2\pi} \sqrt{\frac{6}{N_{Sym\_B} \cdot (N^2_{Sym\_B} - 1) \cdot S/N \cdot Down^3_B}}$$

$$= \frac{1}{Ampl\_Red} \cdot \frac{1}{2\pi} \sqrt{\frac{6}{N_{Sym\_B} \cdot (N^2_{Sym\_B} - 1) \cdot S/N \cdot Down^3_B} \cdot \underbrace{\frac{N^2_{Sym\_B}}{N^2_{Sym\_B}}}_{erweitern}}$$

$$= \frac{1}{Ampl\_Red} \cdot \frac{1}{2\pi} \sqrt{\frac{6}{N_{Sym} \cdot (N^2_{Sym\_B} - 1) \cdot S/N \cdot N^2_{Sym}} \cdot \frac{N^2_{Sym\_B}}{1}}$$

$$= \underbrace{\frac{\sqrt{\frac{N^2_{Sym\_B}}{N^2_{Sym\_B} - 1}}}{Ampl\_Red}}_{Anstieg_\sigma} \cdot \underbrace{\frac{1}{2\pi} \sqrt{\frac{6}{N_{Sym} \cdot S/N \cdot \underbrace{N^2_{Sym}}_{\approx N^2_{Sym} - 1}}}}_{\sigma^{Cramér-Rao}_{\hat{\Delta fT_a}}}$$

$$(88)$$

Damit ergibt sich durch Einsetzen von Gleichung (85) der gesuchte $Anstieg_\sigma$ von $\sigma_{\hat{\Delta fTa}}$ gegenüber der Cramér-Rao-Grenze gemäß

$$Anstieg_\sigma = \frac{\sqrt{\frac{N^2_{Sym\_B}}{N^2_{Sym\_B} - 1}}}{Ampl\_Red} = \frac{\sqrt{\frac{N^2_{Sym\_B}}{N^2_{Sym\_B} - 1}}}{sinc(\frac{0.5}{N_{Sym\_B}})}$$

$$(89)$$

In folgender Tabelle

| $N_{Sym\_B}$ | $Anstieg_\sigma$ |
|---|---|
| 2 | 1.28 |
| 4 | 1.059 |
| 8 | 1.014 |
| 16 | 1.0036 |
| 32 | 1.0009 |

ist der $Anstieg_\sigma$ für verschiedene Längen $N_{sym\_B}$ angegeben. Diese theoretischen Werte wurden auch durch Simulationen bestätigt. Man erkennt, dass bereits bei einer Länge von

$$N_{sym\_B} = 8$$

$$(90)$$

der $Anstieg_\sigma$ =1.014 beträgt. In Worten ausgedrückt bedeutet dies: Wenn im Block 22B der Grobschätzer auf nur $N_{sym\_B}$ = 8 Samples downgesampelt wird, entsteht gegenüber dem optimalen Schätzer nur ein vernachlässigbarer Anstieg von 1.4 %. Bei noch höheren Ansprüchen wird $N_{sym\_B}$ = 16 mit $Anstieg_\sigma$ = 1.0036 empfohlen, d.h. der Anstieg beträgt nur 0.036%. Noch größere $N_{sym\_B}$ sind in der Praxis selbst bei höchsten Ansprüchen nicht erforderlich.

Weiterhin soll auf den besonderen Fall $N_{sym\_B}$ = 2 hingewiesen werden: Laut obiger Tabelle beträgt der Anstieg 28%, was für viele Anwendungen auch ausreichend ist. Die Komplexität ist bei dieser Wahl extrem niedrig, weil im Block 22B die nachfolgende FFT und IFFT und die Feinschätzung nicht notwendig sind. Der Grund ist folgender: Aus der Phasendifferenz der $N_{sym\_B}$ =2 Abtastwerte (Samples) kann der Frequenzschätzwert sofort analytisch bestimmt werden.

Es sind zwei benachbarte Abtastwerte

$$Z_0 = |Z_0| \cdot e^{j\varphi_0} \quad \text{und} \quad Z_1 = |Z_1| \cdot e^{j\varphi_1} \tag{91}$$

Aus

$$Z_1 \cdot Z_0 = |Z_0| \cdot |Z_1| \cdot e^{j(\varphi_1 - \varphi_0)} = |Z_0| \cdot |Z_1| \cdot e^{j\Delta\varphi} \tag{92}$$

ergibt sich $\Delta\varphi$.

Mit

$$\Delta\varphi = 2\pi \cdot \Delta f \cdot T_a \tag{93}$$

ergibt sich $\Delta f$.

In folgender Tabelle

|  | Frequenzschätzer nach Fig. 5 (DE 103 09 262) | erfindungsgemäßer Frequenzschätzer nach Fig. 9 |
|---|---|---|
| Stufe 22A: FFT | $N_{FFT} \geq 4 \cdot N_{Sym}$ | $N_{FFT\_A} \geq N_{sym} / Down_A$ (Gl.(74)) |
| Stufe 22A: IFFT | $N_{FFT} \geq 4 \cdot N_{Sym}$ | - |
| Stufe 22B: FFT | - | $N_{FFT\_B} = 4 \cdot N_{Sym\_B} = 32$ (Gl.(79)) |
| Stufe 22B: IFFT | - | $N_{FFT\_B} = 4 \cdot N_{Sym\_B} = 32$ (Gl.(79)) |
| Iterative Feinschätzung in Stufe 23 mit | $N_{Sym}$ Samples | $N_{FFT\_B} = 32$ Samples |

wird der Signalverarbeitungs-Aufwand des in Fig. 5 gezeigten universellen Frequenzschätzer nach DE 103 09 262 mit dem in Fig. 9 gezeigten erfindungsgemäßen universellen Frequenzschätzers verglichen. Als Ergebnis läßt sich folgendes feststellen:

- Stufe 22A: Man erkennt, daß der erfindungsgemäße Schätzer 70 selbst beim vollen Suchbereich der Frequenz ($Down_A$=1) eine um den Faktor 4 kleinere FFT-Länge benötigt, wodurch der Signalverarbeitungs-Aufwand um den Faktor 4·ld(4) = 8 reduziert wird. Hinzu kommt, dass beim erfindungsgemäßen Schätzer keine IFFT benötigt wird, wodurch der Signalverarbeitungs-Aufwand SNR insgesamt um den Faktor 16 niedriger ist. Bei $Down_A$>1 ist der Signalverarbeitungs-Aufwand sogar um den Faktor

$$4 Down_A \cdot \text{ld}(4 Down_A) \cdot 2 = 8 Down_A \cdot (2 + \text{ld}(Down_A)) \tag{94}$$

kleiner.

- Stufe 22B: Beim erfindungsgemäßen Schätzer 70 kommt zusätzlich die Stufe 22B hinzu. Allerdings ist die FFT-Länge $N_{FFT\_B}$ unabhängig von der Beobachtungslänge $N_{Sym}$ und mit $N_{FFT\_B}$=32 sehr klein. Damit ist der zusätzliche Signalverarbeitungsaufwand mit steigendem $N_{Sym}$ vernachlässigbar.

- Iterative Feinschätzung in Stufe 23: Beim erfindungsgemäßen Schätzer 70 wird die iterative Feinschätzung mit nur $N_{FFT\_B}$ = 32 Samples durchgeführt, d.h. der Signalverarbeitungs-Aufwand ist niedrig und weiterhin unabhängig von der Beobachtungslänge $N_{Sym}$. Beim Schätzer nach DE 103 09 262 wird die volle Beobachtungslänge von $N_{Sym}$ Samples verwendet, was mit steigendem $N_{Sym}$ einen hohen Signalverarbeitungs-Aufwand bedeutet. Weiterhin gilt zu beachten, daß der Signalverarbeitungs-Aufwand der iterativen Feinschätzung wegen der notwendigen Frequenz-Kompensation hoch ist.

Die vorstehenden Ausführungen zeigen, daß der erfindungsgemäße Schätzer 70 dem Schätzer nach DE 103 09 262 überlegen ist, obwohl dieser bereits sehr gut optimiert ist.

Die Erfindung ist nicht auf das dargestellte Ausführungsbeispiel, sondern auf den Umfang der Ansprüche 1-20 beschränkt und läßt sich auf eine Vielzahl unterschiedlicher digitaler Signale mit großem Erfolg anwenden.

## Patentansprüche

**1.** Verfahren zum Schätzen der Frequenz $\Delta f$ einer digitalen Eingangs-Signalfolge $x_v$ mit einer Frequenz-Grobschätzung (22) unter Verwendung einer diskreten Fourier-Transformation,
wobei die Frequenz-Grobschätzung (22) zur Erzeugung eines ersten Grobschätzwerts $\Delta \hat{f}_{coarse,A}$ der Frequenz mittels einer ersten diskreten Fourier-Transformation (25A) der Eingangs-Signalfolge $x_v$ zur Erzeugung einer ersten Fourierfolge $X_\mu$, einer Betragsbildung (26A) der ersten Fourierfolge $X_\mu$ und einer Bestimmung (27A) des Maximums des Betrags $|X_\mu|$ oder der Funktion $|X_\mu|^2$ des Betrags der Fourierfolge erfolgt,
**dadurch gekennzeichnet,**
**dass** die Frequenz-Grobschätzung (22) in zumindest zwei Stufen (25A-28A; 25B-28B, 29) zeitlich nacheinander erfolgt und jeweils zwischen den Stufen (25A-28A; 25B-28B, 29) eine erste Mittelung (60B) der Abtastwerte über eine vorgegebene Anzahl von Abtastwerten und eine erste Reduzierung der Abtastrate (61B) der Eingangs-Signalfolge erfolgt,
**dass** die gesagte Erzeugung des ersten Grobschätzwerts $\Delta \hat{f}_{coarse,A}$ zumindest in der ersten Stufe (25A-28A) der Frequenz-Grobschätzung (22) erfolgt, und
**dass** nach der ersten Stufe (25A-28A) der Frequenz-Grobschätzung (22) und vor der ersten Mittelung (60B) und der ersten Reduzierung der Abtastrate (61B) eine Kompensation (63) der Eingangs-Signalfolge $x_v$ mit Twiddle-Faktoren erfolgt, die aus dem ersten Grobschätzwert $\Delta \hat{f}_{coarse,A}$ der Frequenz gebildet werden.

**2.** Verfahren nach Anspruch 1,
**dadurch gekennzeichnet,**
**dass** vor der ersten Stufe (25A-28A) eine zweite Mittelung der Abtastwerte (60A) über eine vorgegebene Anzahl von Abtastwerten und eine zweite Reduzierung der Abtastrate (61A) der Eingangs-Signalfolge erfolgt.

**3.** Verfahren nach Anspruch 2,
**dadurch gekennzeichnet,**
**dass** die erste Reduzierung der Abtastrate (61B) größer als die zweite Reduzierung der Abtastrate (61A) ist.

**4.** Verfahren nach einem der Ansprüche 1 bis 3,
**dadurch gekennzeichnet,**
**dass** der erste Grobschätzwert $\Delta \hat{f}_{coarse,A}$ der Frequenz aus dem Maximum des Betrags $|X_\mu|$ oder der Funktion $|X_\mu|^2$ des Betrags der ersten Fourierfolge gemäß

$$\Delta \hat{f}_{coarse,A} = \begin{cases} \mu_{\max} \cdot f_Q & \text{für } \mu_{\max} \leq N_{FFT}/2 \\ (\mu_{\max} - N_{FFT}) \cdot f_Q & \text{für } \mu_{\max} > N_{FFT}/2 \end{cases}$$

berechnet wird, wobei

$f_Q$ die Quantisierung der ersten diskreten Fourier-Transformation im Frequenzbereich,
$N_{FFT}$ die Länge der ersten Fourierfolge $X_\mu$ und
$\mu_{\max}$ der Index des diskreten Werts der ersten Fourierfolge, bei welchem das Maximum des Betrags $|X_\mu|$ bzw. der Funktion $|X_\mu|^2$ des Betrags der ersten Fourierfolge $X_\mu$ vorliegt,

bedeuten.

**5.** Verfahren nach einem der Ansprüche 1 bis 4,
**dadurch gekennzeichnet,**
**dass** die Twiddle-Faktoren die Form

$$e^{-j\cdot 2\pi\cdot\Delta\hat{f}_{coarse,A}\cdot v\cdot T_a}$$

haben, wobei

$\Delta\hat{f}_{coarse,A}$ den ersten Grobschätzwert der Frequenz,
$T_a$ die Abtastrate vor der Abtastratenreduktion und
v einen Laufzählindex

bedeuten.

6. Verfahren nach einem der Ansprüche 1 bis 5,
   **dadurch gekennzeichnet,**
   **dass** die Twiddle-Faktoren aus der ersten diskreten Fourier-Transformation übernommen werden.

7. Verfahren nach einem der Ansprüche 1 bis 6,
   **dadurch gekennzeichnet,**
   **dass** in der zweiten Stufe (25B-28B,29) der Frequenz-Grobschätzung (22) zur Erzeugung eines zweiten Grobschätzwerts $\Delta\hat{f}_{coarse,B}$ der Frequenz eine zweite diskrete Fourier-Transformation (25B) der kompensierten und unterabgetasteten Eingangs-Signalfolge zur Erzeugung einer zweiten Fourierfolge $X_\mu$, eine Betragsbildung (26B) der zweiten Fourierfolge $X_\mu$ und eine Bestimmung (27B) des Maximums des Betrags $|X_\mu|$ oder der Funktion $|X_\mu|^2$ des Betrags der zweiten Fourierfolge erfolgt.

8. Verfahren nach Anspruch 7,
   **dadurch gekennzeichnet,**
   **dass** der zweite Grobschätzwert $\Delta\hat{f}_{coarse,A}$ der Frequenz aus dem Maximum des Betrags $|X_\mu|$ oder der Funktion $|X_\mu|X^2$ des Betrags der zweiten Fourierfolge gemäß

$$\Delta\hat{f}_{coarse,B} = \begin{cases} \mu_{max}\cdot f_Q & \text{für } \mu_{max} \leq N_{FFT}/2 \\ (\mu_{max} - N_{FFT})\cdot f_Q & \text{für } \mu_{max} > N_{FFT}/2 \end{cases}$$

berechnet wird,
wobei

$f_Q$ die Quantisierung der zweiten diskreten Fourier-Transformation im Frequenzbereich,
$N_{FFT}$ die Länge der zweiten Fourierfolge $X_\mu$ und
$\mu_{max}$ der Index des diskreten Werts der zweiten Fourierfolge, bei welchem das Maximum des Betrags $|X_\mu|$) bzw. der Funktion $|X_\mu|^2$ des Betrags der zweiten Fourierfolge $X_\mu$ vorliegt,

bedeuten.

9. Verfahren nach Anspruch 7 oder 8,
   **dadurch gekennzeichnet,**
   **dass** die zweite Fourierfolge $X_\mu$, der Betrag $|X_\mu|$ oder eine Funktion $|X_\mu|^2$ des Betrags der zweiten Fourierfolge entsprechend dem Index $\mu_{max}$, bei welchem das Maximum des Betrags $|X_\mu|$ oder der Funktion $|X_\mu|^2$ des Betrags der zweiten Fourierfolge $X_\mu$ vorliegt, verschoben wird, und dann zur Erzeugung einer rücktransformierten Signalfolge $y_v$ eine inverse diskrete Fourier-Transformation (29) durchgeführt wird und die rücktransformierten Signalfolge $y_v$ mit dem zweiten Grobschätzwert $\Delta\hat{f}_{coarse,B}$ der Frequenz zur Erzeugung einer kompensierten, rücktransformierten Signalfolge $y_{v,comp}$ kompensiert wird.

10. Verfahren nach Anspruch 9,
    **dadurch gekennzeichnet,**
    **dass** die Kompensation gemäß

$$y_{v,comp} = y_v \cdot e^{-j\cdot 2\pi\cdot\Delta\hat{f}_{coarse,B}\cdot v\cdot T_a}$$

erfolgt, wobei

$y_v$ die rücktransformierte Signalfolge,
$y_{\chi,comp}$ die kompensierte, rücktransformierte Signalfolge,
$\Delta\hat{f}_{oarse,B}$ den zweiten Grobschätzwert der Frequenz,
$T_\alpha$ die reduzierte Abtastperiode und
v den Symbolindex der rücktransformierten Signalfolge bedeuten.

**11.** Verfahren nach einem der Ansprüche 1 bis 10,
**dadurch gekennzeichnet,**
**dass** ein von der ersten Stufe der Freuquenz-Grobschätzung erzeugter erster Grobschätzwert $\Delta\hat{f}_{coarse,A}$ der Frequenz und ein von der zweiten Stufe der Frequenz-Grobschätzung erzeugter zweiter Grobschätzwert $\Delta\hat{f}_{coarse,B}$ der Frequenz zur Erzeugung eines Gesamtschätzwerts $\Delta\hat{f}$ der Frequenz addiert (38) werden.

**12.** Verfahren nach einem der Ansprüche 1 bis 11,
**dadurch gekennzeichnet,**
**dass** ein Feinschätzwert $\Delta\hat{f}_{fine}$ der Frequenz gemäß

$$\Delta\hat{f}_{fine} = \frac{1}{2\pi\cdot T_a}\cdot\frac{\mathrm{Im}\left\{\sum_{v=0}^{N_{Sym}-1} v\cdot y_{v,comp}\right\}}{\mathrm{Re}\left\{\sum_{v=0}^{N_{Sym}-1} v^2\cdot y_{v,comp}\right\}}$$

berechnet wird, wobei
$N_{Sym}$ die Länge der kompensierten, rücktransformierten Signalfolge $y_v comp$ bedeutet.

**13.** Verfahren nach Anspruch 12,
**dadurch gekennzeichnet,**
**dass** die Berechnung des Feinschätzwerts $\Delta\hat{f}_{fine}$ der Frequenz iterativ wiederholt wird.

**14.** Verfahren nach Anspruch 13,
**dadurch gekennzeichnet,**
**dass** in sukzessiven Iterationstufen Feinschätzwert-Iterationsbeiträge gemäß

$$\Delta\hat{f}_{fine}^{\{it\}} = \frac{1}{2\pi\cdot T_a}\cdot\frac{\mathrm{Im}\left\{\sum_{v=0}^{N_{Sym}-1} v\cdot y_{v,comp}^{\{it\}}\right\}}{\mathrm{Re}\left\{\sum_{v=0}^{N_{Sym}-1} v^2\cdot y_{v,comp}^{\{it\}}\right\}}$$

erzeugt werden, wobei it den Iterationsindex der it-ten Iterationsstufe bedeutet,
**dass** die Feinschätzwert-Iterationsbeiträge der bereits durchgeführten Iterationsstufen gemäß

$$\Delta\hat{f}_{fine\_total} = \sum_{\alpha=1}^{it}\Delta\hat{f}_{fine}^{\{it\}}$$

aufaddiert werden und

**dass** die rücktransformierte, kompensierte Signalfolge $y_{v,comp}$ zusätzlich gemäß

$$y_{v,comp}^{\{it\}} = y_{v,comp} \cdot e^{-j \cdot 2\pi \cdot \Delta\hat{f}_{fine\_total} \cdot v \cdot T_a}$$

zur Erzeugung einer kompensierten Iterations-Signalfolge $y_{v,comp}^{\{it\}}$ kompensiert wird, und die nächste Iterationsstufe mit der kompensierten Iterations-Signalfolge durchgeführt wird.

**15.** Verfahren nach einem der Ansprüche 1 bis 14, und Anspruch 11,
**dadurch gekennzeichnet,**
**dass** zusätzlich zum ersten Grobschätzwert $\Delta\hat{f}_{coase,A}$ der Frequenz und zum zweiten Grobschätzwert $\Delta\hat{f}_{coarse,B}$ der Frequenz ein Feinschätzwert $\Delta\hat{f}_{fine}$ der Frequenz zur Erzeugung des Gesamtschätzwerts $\Delta\hat{f}$ der Frequenz addiert (38) werden.

**16.** Verfahren nach Anspruch 15,
**dadurch gekennzeichnet,**
**dass** aus dem Gesamtschätzwert der Frequenz $\hat{\omega}=2\pi \cdot \Delta\hat{f}$ ein Schätzwert der Phase der digitalen Eingangs-Signalfolge $x_v$ gemäß

$$\hat{\phi} = \arg\{ \sum_{v=0}^{N_{Sym}-1} x_v \cdot e^{-j \cdot \Delta\hat{\omega} \cdot v \cdot T_a} \}$$

berechnet wird, wobei
$x_v$ die Eingangs-Signalfolge
bedeutet.

**17.** Verfahren nach einem der Ansprüche 1 bis 16,
**dadurch gekennzeichnet,**
**dass** die erste Mittelung (60B) über nur zwei Abtastwerte erfolgt und der Frequenz-Schätzwert der zweiten Stufe der Frequenz-Grobschätzung aus der Phasendifferenz der beiden Abtastwerte ohne Fouriertransformation direkt bestimmt wird.

**18.** Vorrichtung (21) zum Schätzen der Frequenz $\Delta f$ einer digitalen Eingangs-Signalfolge $x_v$ mit einem Frequenz-Grobschätzer (22) zum Durchführen einer Frequenz-Grobschätzung unter Verwendung einer diskreten Fourier-Transformation,
wobei der Frequenz-Grobschätzer (22) zur Erzeugung eines ersten Grobschätzwerts $\Delta\hat{f}_{coarse,A}$ eine erste diskrete Fourier-Transformation (25A) der Eingangs-Signalfolge $x_v$ zur Erzeugung einer ersten Fourierfolge $X_\mu$, eine Betragsbildung (26A) der ersten Fourierfolge $X_\mu$ und eine Bestimmung (27$_A$) des Maximums des Betrags $|X_\mu|$ oder der Funktion $|X_\mu|^2$ des Betrags der Fourierfolge durchführt,
**dadurch gekennzeichnet,**
**dass** der Frequenz-Grobschätzer (22) in zumindest zwei Stufen (25A-28A; 25B-28B, 29) gegliedert ist,
**dass** jeweils zwischen den Stufen (25A-28A; 25B-28B, 29) ein erster Mittelwert-Bilder (60B) zum Bilden eines Mittelwerts von Abtastwerten über eine vorgegebene Anzahl von Abtastwerten und ein erster Abtastraten-Reduzierer (61B) zur Reduzierung der Abtastrate angeordnet ist,
**dass** die gesagte Erzeugung des ersten Grobschätzwerts $\Delta\hat{f}_{coarse,A}$ von zumindest der ersten Stufe des Frequenz-Grobschätzers (22) durchgeführt wird, und
**dass** nach der ersten Stufe (25A-28A) des Frequenz-Grobschätzers (22) und vor dem ersten Mittelwert-Bilder (60B) und dem ersten Abtastraten-Reduzierer (61B) ein Kompensator (63) zur Kompensation der Eingangs-Signalfolge $x_v$ mit Twiddle-Faktoren, die aus dem ersten Grobschätzwert $\Delta\hat{f}_{coarse,A}$ der Frequenz gebildet werden, angeordnet ist.

**19.** Digitales Speichermedium mit elektronisch auslesbaren Steuersignalen, die so mit einem programmierbaren Computer oder digitalen Signalprozessor zusammenwirken können, dass das Verfahren nach einem der Ansprüche 1 bis 17 ausgeführt wird.

20. Computerprogramm mit Programmcode-Mitteln, um alle Schritte gemäß einem der Ansprüche 1 bis 17 durchführen zu können, wenn das Programm auf einem Computer oder einem digitalen Signalprozessor ausgeführt wird.

**Claims**

1. Method for estimating the frequency $\Delta f$ of a digital input signal sequence $x_v$ with the aid of a coarse frequency estimation (22) by means of a discrete Fourier transform, the coarse frequency estimation (22) being performed in order to generate a first coarse estimate $\Delta \hat{f}_{coarse,A}$ of the frequency by means of a first discrete Fourier transform (25A) of the input signal sequence $x_v$ in order to generate a first Fourier sequence $X_\mu$, an absolute-value formation (26A) of the first Fourier sequence $X_\mu$ and a determination (27A) of the maximum of the absolute value $|X_\mu|$ or of the function $|X_\mu|^2$ of the absolute value of the Fourier sequence,
**characterized**
**in that** the coarse frequency estimation (22) is performed in at least two stages (25A-28A; 25B-28B, 29) one after another in time, and there are performed between the stages (25A-28A; 25B-28B, 29) in each case a first averaging (60B) of the samples over a prescribed number of samples, and a first reduction in the sampling rate (61B) of the input signal sequence,
**in that** said generation of the first coarse estimate $\Delta \hat{f}_{coarse,A}$ is performed at least in the first stage (25A-28A) of the coarse frequency estimation (22), and
**in that** downstream of the first stage (25A-28A) of the coarse frequency estimation (22) and upstream of the first averaging (60B) and of the first reduction in the sampling rate (61B) a compensation (63) of the input signal sequence $x_v$ is performed with the aid of twiddle factors which are formed from the first coarse estimate $\Delta \hat{f}_{coarse,A}$ of the frequency.

2. Method according to Claim 1,
**characterized**
**in that** upstream of the first stage (25A-28A) a second averaging of the samples (60A) is performed over a prescribed number of samples, and a second reduction in the sampling rate (61A) of the input signal sequence is performed.

3. Method according to Claim 2,
**characterized**
**in that** the first reduction in the sampling rate (61B) is greater than the second reduction in the sampling rate (61A).

4. Method according to one of Claims 1 to 3,
**characterized**
**in that** the first coarse estimate $\Delta \hat{f}_{coarse,A}$ of the frequency is calculated from the maximum of the absolute value $|X_\mu|$ or of the function $|X_\mu|^2$ of the absolute value of the first Fourier sequence in accordance with

$$\Delta \hat{f}_{coarse,A} = \begin{cases} \mu_{max} \cdot f_Q & \text{for } \mu_{max} \leq N_{FFT}/2 \\ (\mu_{max} - N_{FFT}) \cdot f_Q & \text{for } \mu_{max} > N_{FFT}/2 \end{cases},$$

wherein

$f_Q$ signifies the quantization of the first discrete Fourier transform in the frequency domain,
$N_{FFT}$ signifies the length of the first Fourier sequence $X_\mu$ and
$\mu_{max}$ signifies the index of the discrete value of the first Fourier sequence for which the maximum of the absolute value $|X_\mu|$ or of the function $|X_\mu|^2$ of the absolute value of the first Fourier sequence $X_\mu$ is present.

5. Method according to one of Claims 1 to 4,
**characterized**
**in that** the twiddle factors take the form of

$$e^{-j \cdot 2\pi \cdot \Delta \hat{f}_{coarse,A} \cdot v \cdot T_a}$$,

wherein

$\Delta \hat{f}_{coarse,A}$ signifies the first coarse estimate of the frequency,
$T_a$ signifies the sampling rate upstream of the sampling rate reduction, and
$V$ signifies a serial counting index.

6. Method according to one of Claims 1 to 5,
**characterized**
**in that** the twiddle factors are taken from the first discrete Fourier transform.

7. Method according to one of Claims 1 to 6,
**characterized**
**in that** in order to generate a second coarse estimate $\Delta \hat{f}_{coarse,B}$ of the frequency there are performed in the second stage (25B-28B, 29) of the coarse frequency estimation (22) a second discrete Fourier transform (25B) of the compensated and undersampled input signal sequence in order to generate a second Fourier sequence $X_\mu$' an absolute-value formation (26B) of the second Fourier sequence $X_\mu$, and a determination (27B) of the maximum of the absolute value $|X_\mu|$ or of the function $|X_\mu|^2$ of the absolute value of the second Fourier sequence.

8. Method according to Claim 7,
**characterized**
**in that** the second coarse estimate $\Delta \hat{f}_{coarse,A}$ of the frequency is calculated from the maximum of the absolute value $|X_\mu|$ or of the function $|X_\mu|^2$ of the absolute value of the second Fourier sequence in accordance with

$$\Delta \hat{f}_{coarse,B} = \begin{cases} \mu_{max} \cdot f_Q & \text{for } \mu_{max} \leq N_{FFT}/2 \\ (\mu_{max} - N_{FFT}) \cdot f_Q & \text{for } \mu_{max} > N_{FFT}/2 \end{cases}$$

wherein

$f_Q$ signifies the quantization of the second discrete Fourier transform in the frequency domain,
$N_{FFT}$ signifies the length of the second Fourier sequence $X_\mu$ and
$\mu_{max}$ signifies the index of the discrete value of the second Fourier sequence for which the maximum of the absolute value $|X_\mu|$ or of the function $|X_\mu|^2$ of the absolute value of the second Fourier sequence $X_\mu$ is present.

9. Method according to Claim 7 or 8,
**characterized**
**in that** the second Fourier sequence $X_\mu$, the absolute value $|X_\mu|$ or a function $|X_\mu|^2$ of the absolute value of the second Fourier sequence is displaced in accordance with the index $\mu_{max}$ of which the maximum of the absolute value $|X_\mu|$ or of the function $|X_\mu|^2$ of the absolute value of the second Fourier sequence $X_\mu$ is present, and then in order to generate a reverse-transformed signal sequence $y_v$ an inverse discrete Fourier transform (29) is carried out and the reverse-transformed signal sequence $y_v$ is compensated with the aid of the second coarse estimate $\Delta \hat{f}_{coarse,B}$ of the frequency in order to generate a compensated, reverse-transformed signal sequence $y_{v,comp}$.

10. Method according to Claim 9,
**characterized**
**in that** the compensation is performed in accordance with

$$y_{v,comp} = y_v \cdot e^{-j \cdot 2\pi \cdot \Delta \hat{f}_{coarse,B} \cdot v \cdot T_a}$$,

wherein

$y_v$ signifies the reverse-transformed signal sequence,

$y_{\chi,comp}$ signifies the compensated, reverse-transformed signal sequence,

$\Delta \hat{f}_{coarse,B}$ signifies the second coarse estimate of the frequency,

$T_\sigma$ signifies the reduced sampling period, and

$V$ signifies the symbol index of the reverse-transformed signal sequence.

**11.** Method according to one of Claims 1 to 10,
**characterized**
**in that** a first coarse estimate $\Delta \hat{f}_{coarse,A}$ of the frequency, which is generated by the first stage of the coarse frequency estimation, and a second coarse estimate $\Delta \hat{f}_{coarse,B}$ of the frequency, which is generated by the second stage of the coarse frequency estimation, are added (38) in order to generate a total estimate $\Delta \hat{f}$ of the frequency.

**12.** Method according to one of Claims 1 to 11,
**characterized**
**in that** a fine estimate $\Delta \hat{f}_{fine}$ of the frequency is calculated in accordance with

$$\Delta \hat{f}_{fine} = \frac{1}{2\pi \cdot T_a} \cdot \frac{\text{Im}\left\{ \sum_{v=0}^{N_{Sym}-1} v \cdot y_{v,comp} \right\}}{\text{Re}\left\{ \sum_{v=0}^{N_{Sym}-1} v^2 \cdot y_{v,comp} \right\}},$$

wherein

$N_{Sym}$ signifies the length of the compensated, reverse-transformed signal sequence $y_{v.comp}$.

**13.** Method according to Claim 12,
**characterized**
**in that** the calculation of the fine estimate $\Delta \hat{f}_{fine}$ of the frequency is iteratively repeated.

**14.** Method according to Claim 13,
**characterized**
**in that** fine estimate iteration contributions are generated in successive iteration stages in accordance with

$$\Delta \hat{f}_{fine}^{\{it\}} = \frac{1}{2\pi \cdot T_a} \cdot \frac{\text{Im}\left\{ \sum_{v=0}^{N_{Sym}-1} v \cdot y_{v,comp}^{\{it\}} \right\}}{\text{Re}\left\{ \sum_{v=0}^{N_{Sym}-1} v^2 \cdot y_{v,comp}^{\{it\}} \right\}},$$

wherein it signifies the iteration index of the it-th iteration stage,
**in that** the fine estimate iteration contributions of the iteration stages already carried out are added in accordance with

$$\Delta \hat{f}_{fine\_total} = \sum_{\alpha=1}^{it} \Delta \hat{f}_{fine}^{\{it\}},$$

and

**in that** the reverse-transformed, compensated signal sequence $y_{v,comp}$ is additionally compensated in accordance with

$$y_{v,comp}^{\{it\}} = y_{v,comp} \cdot e^{-j \cdot 2 \pi \cdot \hat{\Delta f}_{fine\_tom} \cdot v \cdot T_a}$$

in order to generate a compensated iteration signal sequence $y_{v,comp}^{\{it\}}$, and the next iteration stage is carried out with the aid of the compensated iteration signal sequence.

15. Method according to one of Claims 1 to 14, and Claim 11,
**characterized**
**in that** in addition to the first coarse estimate $\hat{\Delta f}_{coarse,A}$ of the frequency and to the second coarse estimate $\hat{\Delta f}_{coarse,B}$ of the frequency, a fine estimate $\hat{\Delta f}_{fine}$ of the frequency is added (38) in order to generate the total estimate $\hat{\Delta f}$ of the frequency.

16. Method according to Claim 15,
**characterized**
**in that** an estimate of the phase of the digital input signal sequence $x_v$ is calculated from the total estimate of the frequency $\hat{\omega} = 2\pi \cdot \hat{\Delta f}$ in accordance with

$$\hat{\phi} = \arg \left\{ \sum_{v=0}^{N_{Skm}-1} x_v \cdot e^{-j \cdot \Delta \hat{\omega} \cdot v \cdot T_a} \right\}$$

wherein

$x_v$ signifies the input signal sequence.

17. Method according to one of Claims 1 to 16,
**characterized**
**in that** the first averaging (60B) is performed via only two samples, and the frequency estimate of the second stage of the coarse frequency estimation is determined directly from the phase difference of the two samples without Fourier transformation.

18. Device (21) for estimating the frequency $\Delta f$ of a digital input signal sequence $x_v$ having
a coarse frequency estimator (22) for carrying out a coarse frequency estimation by means of a discrete Fourier transform,
in order to generate a first coarse estimate $\hat{\Delta f}_{coarse,A}$ the coarse frequency estimator (22) carrying out a first discrete Fourier transform (25A) of the input signal sequence $x_v$ in order to generate a first Fourier sequence $X_\mu$, an absolute-value formation (26A) of the first Fourier sequence $X_\mu$ and a determination (27A) of the maximum of the absolute value $|X_\mu|$ or of the function $|X_\mu|^2$ of the absolute value of the Fourier sequence,
**characterized**
**in that** the coarse frequency estimator (22) is segmented into at least two stages (25A-28A; 25B-28B, 29),
**in that** there are arranged in each case between the stages (25A-28A; 25B-28B, 29) a first averager (60B) for forming an average of samples over a prescribed number of samples and a first sampling rate reducer (61B) for reducing the sampling rate,
**in that** said generation of the first coarse estimate $\hat{\Delta f}_{coarse,A}$ is carried out by at least the first stage of the coarse frequency estimator (22), and
**in that** there is arranged downstream of the first stage (25A-28A) of the coarse frequency estimator (22) and upstream of the first averager (60B) and of the first sampling rate reducer (61B) a compensator (63) for compensating the input signal sequence $X_v$ with the aid of twiddle factors which are formed from the first coarse estimate $\hat{\Delta f}_{coarse,A}$ of the frequency.

**19.** Digital storage medium with electronically readable control signals which can cooperate with a programmable computer or digital signal processor so that the method according to one of Claims 1 to 17 is executed.

**20.** Computer program having program code means in order to be able to carry out all the steps in accordance with one of Claims 1 to 17 when the program is executed on a computer or a digital signal processor.

**Revendications**

**1.** Procédé pour estimer la fréquence $\Delta f$ d'une suite de signaux d'entrée numérique $x_v$ grâce à une estimation grossière de fréquence (22) en utilisant une transformation de Fourier discrète,
dans lequel l'estimation grossière de fréquence (22) est effectuée en vue de la génération d'une première valeur d'estimation grossière $\Delta \hat{f}_{coarse,A}$ de la fréquence au moyen d'une première transformation de Fourier discrète (25A) de la suite de signaux d'entrée $x_v$ pour générer une première suite de Fourier $X_\mu$, d'une formation de valeur absolue (26A) de la première suite de Fourier $X_\mu$ et d'une détermination (27A) du maximum de la valeur absolue $|X_\mu|$ ou de la fonction $|X_\mu|^2$ de la valeur absolue de la suite de Fourier,
**caractérisé en ce que**
l'estimation grossière de fréquence (22) est effectuée dans au moins deux étapes (25A-28A ; 25B-28B, 29) successivement dans le temps et respectivement entre les étapes (25A-28A ; 25B-28B, 29) sont effectuées une première moyenne (60B) des valeurs d'échantillonnage sur un nombre donné de valeurs d'échantillonnage et une première réduction du taux d'échantillonnage (61B) de la suite de signaux d'entrée,
**en ce que** ladite génération de la première valeur d'estimation grossière $\Delta \hat{f}_{coarse,A}$ est effectuée au moins dans la première étape (25A-28A) de l'estimation grossière de fréquence (22), et
**en ce qu'**une compensation (63) de la suite de signaux d'entrée $x_v$ est effectuée à l'aide de facteurs de rotation, qui sont formés à partir de la première valeur d'estimation grossière $\Delta \hat{f}_{coarse,A}$ de la fréquence, après la première étape (25A-28A) de l'estimation grossière de fréquence (22) et avant la première moyenne (60B) et la première réduction du taux d'échantillonnage (61B).

**2.** Procédé selon la revendication 1, **caractérisé en ce que**
avant la première étape (25A-28A) sont effectuées une seconde moyenne des valeurs d'échantillonnage (60A) sur un nombre déterminé de valeurs d'échantillonnage et une seconde réduction du taux d'échantillonnage (61A) de la suite de signaux d'entrée.

**3.** Procédé selon la revendication 2, **caractérisé en ce que**
la première réduction du taux d'échantillonnage (61B) est supérieure à la seconde réduction du taux d'échantillonnage (61A).

**4.** Procédé selon l'une des revendications 1 à 3, **caractérisé en ce que**
la première valeur d'estimation grossière $\Delta \hat{f}_{coarse,A}$ de la fréquence est calculée à partir du maximum de la valeur absolue $|X_\mu|$ ou de la fonction $|X_\mu|^2$ de la valeur absolue de la première suite de Fourier selon

$$\Delta \tilde{f}_{coarse,A} = \begin{cases} \mu_{max} \cdot f_Q & pour\ \mu_{max} \leq N_{FFT}/2 \\ (\mu_{max} - N_{FFT}) \cdot f_Q & pour\ \mu_{max} > N_{FFT}/2 \end{cases}$$

dans laquelle

$f_Q$ est la quantification de la première transformation de Fourier discrète dans le domaine de fréquence,
$N_{FFT}$ est la longueur de la première suite de Fourier $X_\mu$ et
$\mu_{max}$ est l'indice de la valeur discrète de la première suite de Fourier, dans lequel le maximum de la valeur absolue $|X_\mu|$ ou de la fonction $|X_\mu|^2$ de la valeur absolue de la première suite de Fourier $X_\mu$ existe.

**5.** Procédé selon l'une des revendications 1 à 4, **caractérisé en ce que**
les facteurs de rotation ont la forme

$$e^{-j \cdot 2\pi \cdot \Delta \hat{f}_{coarse,A} \cdot \nu T_a}$$

dans laquelle

$\Delta \hat{f}_{coarse,A}$ représente la première valeur d'estimation grossière de la fréquence,
$T_a$ représente le taux d'échantillonnage avant la réduction de taux d'échantillonnage et
$\nu$ représente un indice de numéro de séquence.

6.  Procédé selon l'une des revendications 1 à 5, **caractérisé en ce que**
    les facteurs de rotation sont dérivés de la première transformation de Fourier discrète.

7.  Procédé selon l'une des revendications 1 à 6, **caractérisé en ce que**
    au cours de la seconde étape (25B-28B, 29) de l'estimation grossière de fréquence (22) en vue de la génération d'une seconde valeur d'estimation grossière $\Delta \hat{f}_{coarse,B}$ de la fréquence sont effectuées une seconde transformation de Fourier discrète (25B) de la suite de signaux d'entrée compensée et sous-échantillonnée en vue de la génération d'une seconde suite de Fourier $X_\mu$, une formation de valeur absolue (26B) de la seconde suite de Fourier $X_\mu$ et une détermination (27B) du maximum de la valeur absolue $|X_\mu|$ ou de la fonction $|X_\mu|^2$ de la valeur absolue de la seconde suite de Fourier.

8.  Procédé selon la revendication 7, **caractérisé en ce que**
    la seconde valeur d'estimation grossière $\Delta \hat{f}_{coarse,A}$ de la fréquence est calculée à partir du maximum de la valeur absolue $|X_\mu|$ ou de la fonction $|X_\mu|^2$ de la valeur absolue de la seconde suite de Fourier selon

$$\Delta \hat{f}_{coarse,B} = \begin{cases} \mu_{max} \cdot f_Q & pour \ \mu_{max} \leq N_{FFT}/2 \\ (\mu_{max} - N_{FFT}) \cdot f_Q & pour \ \mu_{max} > N_{FFT}/2 \end{cases}$$

dans laquelle

$f_Q$ est la quantification de la seconde transformation de Fourier discrète dans le domaine de fréquence,
$N_{FFT}$ est la longueur de la seconde suite de Fourier $X_\mu$ et
$\mu_{max}$ est l'indice de la valeur discrète de la seconde suite de Fourier, dans laquelle le maximum de la valeur absolue $|X_\mu|$ ou de la fonction $|X_\mu|^2$ de la valeur absolue de la seconde suite de Fourier $X_\mu$ existe.

9.  Procédé selon la revendication 7 ou 8, **caractérisé en ce que**
    la seconde suite de Fourier $X_\mu$, la valeur absolue $|X_\mu|$ ou une fonction $|X_\mu|^2$ de la valeur absolue de la seconde suite de Fourier correspondant à l'indice $\mu_{max}$, dans lequel le maximum de la valeur absolue $|X_\mu|$ ou de la fonction $|X_\mu|^2$ de la valeur absolue de la seconde suite de Fourier $X_\mu$ existe, est déplacée, et ensuite, en vue de la génération d'une suite de signaux inversement transformée $Y_\nu$ est effectuée une transformation de Fourier discrète inverse (29) et la suite de signaux inversement transformée $Y_\nu$ est compensée avec la seconde valeur d'estimation grossière $\Delta \hat{f}_{coarse,B}$ de la fréquence en vue de la génération d'une suite de signaux inversement transformée compensée $Y_{\nu,comp}$.

10. Procédé selon la revendication 9, **caractérisé en ce que**
    la compensation est effectuée selon

$$y_{\nu,comp} = y_\nu \cdot e^{-j \cdot 2\pi \cdot \Delta \hat{f}_{coarse,B} \cdot \nu \cdot T_a}$$

dans laquelle

$Y_\nu$ est la suite de signaux inversement transformée,
$Y_{\nu,\,comp}$ est la suite de signaux inversement transformée compensée,

$\Delta \hat{f}_{coarse,B}$ est la seconde valeur d'estimation grossière de la fréquence,
$T_a$ est la période d'échantillonnage réduite et
v est l'indice de symbole de la suite de signaux inversement transformée.

**11.** Procédé selon l'une des revendications 1 à 10, **caractérisé en ce que**
une première valeur d'estimation grossière $\Delta \hat{f}_{coarse,A}$ de la fréquence générée par la première étape de l'estimation grossière de fréquence et une seconde valeur d'estimation grossière $\Delta \hat{f}_{coarse,B}$ de la fréquence générée à partir de la seconde étape de l'estimation grossière de fréquence sont additionnées (38) en vue de la génération d'une valeur d'estimation totale $\Delta \hat{f}$ de la fréquence.

**12.** Procédé selon l'une des revendications 1 à 11, **caractérisé en ce que**
une valeur d'estimation fine $\Delta \hat{f}_{fine}$ de la fréquence est calculée selon

$$\Delta \hat{f}_{fine} = \frac{1}{2\pi \cdot T_a} \cdot \frac{\text{Im}\left\{ \sum_{v=0}^{N_{Sym}-1} v \cdot y_{v,comp} \right\}}{\text{Re}\left\{ \sum_{v=0}^{N_{Sym}-1} v^2 \cdot y_{v,comp} \right\}}$$

dans laquelle
$N_{sym}$ est la longueur de la suite de signaux inversement transformée compensée $Y_v$.

**13.** Procédé selon la revendication 12, **caractérisé en ce que**
le calcul de la valeur d'estimation fine $\Delta \hat{f}_{fine}$ de la fréquence est répété de façon itérative.

**14.** Procédé selon la revendication 13, **caractérisé en ce que**
des parties d'itération de valeur d'estimation fine sont générées dans les étapes d'itération successives selon

$$\Delta \hat{f}_{fine}^{\{it\}} = \frac{1}{2\pi \cdot T_a} \cdot \frac{\text{Im}\left\{ \sum_{v=0}^{N_{Sym}-1} v \cdot y_{v,comp}^{\{it\}} \right\}}{\text{Re}\left\{ \sum_{v=0}^{N_{Sym}-1} v^2 \cdot y_{v,comp}^{\{it\}} \right\}}$$

dans laquelle it est l'index d'itération de l'it-ième étape d'itération,
**en ce que** les parties d'itération de valeur d'estimation fine des étapes d'itération déjà effectuées sont additionnées selon

$$\Delta \hat{f}_{fine\_total} = \sum_{\alpha=1}^{it} \Delta \hat{f}_{fine}^{\{it\}}$$

et
**en ce que** la suite de signaux compensée inversement transformée $Y_{v,comp}$ est compensée de plus selon

$$y_{v,comp}^{\{it\}} = y_{v,comp} \cdot e^{-j\cdot 2\pi \cdot \Delta \hat{f}_{fine\_total} \cdot v \cdot T_a}$$

en vue de la génération d'une suite de signaux d'itération compensée $Y_{v,comp}$, et l'étape d'itération suivante est effectuée avec la suite de signaux d'itération compensée.

**15.** Procédé selon l'une des revendications 1 à 14, et la revendication 11, **caractérisé en ce que**
en plus de la première valeur d'estimation grossière $\Delta\hat{f}_{coarse,A}$ de la fréquence et de la seconde valeur d'estimation grossière $\Delta\hat{f}_{coarse,B}$ de la fréquence est ajoutée (38) une valeur d'estimation fine $y_{v,comp}^{\{it\}}$ de la fréquence en vue de la génération de la valeur d'estimation totale $\Delta\hat{f}$ de la fréquence.

**16.** Procédé selon la revendication 15, **caractérisé en ce que**
une valeur d'estimation de la phase de la suite de signaux d'entrée numérique $x_v$ est calculée à partir de la valeur d'estimation totale de la fréquence $\hat{\omega}=2\pi\cdot\Delta\hat{f}$ selon

$$\hat{\phi} = \arg\left\{ \sum_{v=0}^{N_{Sym}-1} x_v \cdot e^{-j\cdot\Delta\hat{\omega}\cdot v\cdot T_a} \right\}$$

dans laquelle

$x_v$ est la suite de signaux d'entrée.

**17.** Procédé selon l'une des revendications 1 à 16, **caractérisé en ce que**
la première moyenne (60B) est effectuée sur seulement deux valeurs d'échantillonnage et la valeur d'estimation de fréquence de la seconde étape de l'estimation grossière de fréquence est déterminée directement à partir de la différence de phase des deux valeurs d'échantillonnage sans transformation de Fourier.

**18.** Dispositif (21) pour estimer la fréquence $\Delta f$ d'une suite de signaux d'entrée numérique $x_v$ comportant
un dispositif d'estimation grossière de fréquence (22) pour effectuer une estimation grossière de fréquence en utilisant une transformation de Fourier discrète,
dans lequel le dispositif d'estimation grossière de fréquence (22) effectue en vue de la génération d'une première valeur d'estimation grossière $\Delta\hat{f}_{coarse,A}$ une première transformation de Fourier discrète (25A) de la suite de signaux d'entrée $x_v$ en vue de la génération d'une première suite de Fourier $X_\mu$, une formation de valeur absolue (26A) de la première suite de Fourier $X_\mu$ et une détermination (27A) du maximum de la valeur absolue $|X_\mu|$ ou de la fonction $|X_\mu|^2$ de la valeur absolue de la suite de Fourier,
**caractérisé en ce que**
le dispositif d'estimation grossière de fréquence (22) est divisé en au moins deux étapes (25A-28A ; 25B-28B, 29),
**en ce que** respectivement entre les étapes (25A-28A ; 25B-28B, 29) est disposé un premier dispositif de formation d'images de valeur moyenne (60B) pour former l'image d'une valeur moyenne de valeurs d'échantillonnage sur un nombre prédéterminé de valeurs d'échantillonnage et un premier réducteur de taux d'échantillonnage (61B) pour réduire le taux d'échantillonnage,
**en ce que** ladite génération de la première valeur d'estimation grossière $\Delta\hat{f}_{coarse,A}$ est effectuée par au moins la première étape du dispositif d'estimation grossière de fréquence (22), et
**en ce que**, après la première étape (25A-28A) du dispositif d'estimation grossière de fréquence (22) et avant le premier dispositif de formation d'images de valeur moyenne (60B) et le premier réducteur de taux d'échantillonnage (61B), est disposé un compensateur (63) en vue de la compensation de la suite de signaux d'entrée $X_v$ avec des facteurs de rotation, qui sont formés à partir de la première valeur d'estimation grossière $\Delta\hat{f}_{coarse,A}$ de la fréquence.

**19.** Support de mémoire numérique comportant des signaux de commande pouvant être lus électroniquement, qui peuvent agir conjointement avec un ordinateur programmable ou un processeur de signaux numérique, de sorte que le procédé selon l'une des revendications 1 à 17 est effectué.

**20.** Programme informatique comportant des moyens de code de programme, pour pouvoir effectuer toutes les étapes selon l'une des revendications 1 à 17, lorsque le programme est exécuté sur un ordinateur ou un processeur de signaux numérique.

# Fig. 1

# Fig. 2

## Fig. 3

## Fig. 4

Fig. 5
(Stand der Technik)

Fig. 6
(Stand der Technik)

# Fig. 7

# Fig. 8

Fig. 9A

Frequenz-Grobschätzung A mittels FFT

$[N_{Sym}]$

$h_{mean\_A}(v)$ — 60A

$Down_A$ — 61A

$[N_{Sym\_A}] = [N_{Sym}/Down_A]$

FFT der Länge $N_{FFT\_A}$ — 25A

$X_\mu$

$|X_\mu|^2$ — 26A

$Y_\mu$

Maximumsuche $\mu_{max} = \arg\{\max(Y_\mu)\}$ — 27A

Umrechnung $\mu_{max} \rightarrow \Delta\hat{f}_{coarse\_A}$ — 28A

22A

Twiddle-Faktoren — 62

$e^{-j\cdot 2\pi \Delta\hat{f}_{coarse\_A}\cdot vT_a}$

$x_{v,comp}$

63

Frequenz-Grobschätzung B mittels FFT

$h_{mean\_B}(v)$ — 60B

$Down_B$ — 61B

$[N_{Sym\_B}] = [N_{Sym}/Down_B]$

FFT der Länge $N_{FFT\_B}$ — 25B

$X_\mu$

$|X_\mu|^2$ — 26B

$Y_\mu$

IFFT $\{Y_{\mu+\mu\_max}\}$ der Länge $N_{FFT\_B}$ — 29

Maximumsuche $\mu_{max} = \arg\{\max(Y_\mu)\}$ — 27B

Umrechnung $\mu_{max} \rightarrow \Delta\hat{f}_{coarse\_B}$ — 28B

22B

$x_v$

22

70

Fig. 9

| Fig. 9A | Fig. 9B |
|---------|---------|

$$(*) \quad \Delta\hat{f}_{fine}^{\{it\}} = \frac{1}{2\pi\cdot T_a'}\cdot\frac{Im\left\{\sum_{v=0}^{N_{Sym}-1} v\cdot y_{v,comp}^{\{it\}}\right\}}{Re\left\{\sum_{v=0}^{N_{Sym}-1} v^2\cdot y_{v,comp}^{\{it\}}\right\}} \quad mit \; T_a' = T_a\cdot Down_B$$

EP 1 626 549 B1

## Fig. 9B

Frequenz-Feinschätzung in nof_it Iterationen

$$e^{-j \cdot 2\pi \Delta \widehat{f}_{fine\_total} \cdot v T'_a}$$

$it = it + 1$ — 32

30

33

31

35

36   $it == nof\_it?$

$y_{v,comp}$

$it=1$
$\Delta \widehat{f}_{fine\_total}=0$

$y^{(it)}_{v,comp}$

Berechnung
$\Delta \widehat{f}^{\{it\}}_{fine}$ (*)

$\Delta \widehat{f}_{fine\_total}=\sum\limits_{\alpha=1}^{it}\Delta \widehat{f}^{\{\alpha\}}_{fine}$

$\Delta \widehat{f}_{fine\_total}$

nein

34

ja

37

$\Delta \widehat{f}_{fine\_total}$

23

$\Delta \widehat{f}_{coarse\_A}$

38

$\Delta \widehat{f}$

$\Delta \widehat{f}_{coarse\_B}$

Phasenschätzung — 24   $\widehat{\Phi}$

Verstärkungsschätzung — 39   $\widehat{g}$

EP 1 626 549 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10138963 A1
- US 2002181391 A
- DE 10309262 A1
- DE 10309262